(19) **Europäisches Patentamt**
**European Patent Office**
**Office européen des brevets**

(11) **EP 3 968 486 A1**

(12) **EUROPEAN PATENT APPLICATION**
published in accordance with Art. 153(4) EPC

(43) Date of publication:
**16.03.2022 Bulletin 2022/11**

(21) Application number: **19927667.6**

(22) Date of filing: **06.05.2019**

(51) International Patent Classification (IPC):
**H02J 7/00** *(2006.01)*

(52) Cooperative Patent Classification (CPC):
**H02J 7/00**

(86) International application number:
**PCT/CN2019/085724**

(87) International publication number:
**WO 2020/223880 (12.11.2020 Gazette 2020/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **ZHANG, Jialiang**
 **Dongguan, Guangdong 523860 (CN)**
• **XIE, Hongbin**
 **Dongguan, Guangdong 523860 (CN)**

(74) Representative: **Thorniley, Peter et al**
 **Venner Shipley LLP**
 **200 Aldersgate**
 **London EC1A 4HD (GB)**

(54) **CHARGING METHOD AND CHARGING APPARATUS**

(57) Provided are a charging method and apparatus, capable of meeting battery requirements for usage life and charging speed in different charging processes. The method comprises: determining an actual capacity of a battery; according to the actual capacity of the battery, updating a charging parameter of the battery, the charging parameter of the battery comprising at least one of the following: a charging current of the battery in a constant current stage, a charging cutoff voltage of the battery in a constant current stage, and a charging cutoff current of the battery in a constant voltage stage; charging the battery according to the charging parameter of the battery.

FIG. 5

**Description**

BACKGROUND OF DISCLOSURE

1. Field of the Disclosure

The present disclosure relates to the field of charging, more specifically to a charging method and a charging device.

2. Description of the Related Art

Currently, devices to be charged (such as smartphones) are increasingly favored by consumers, but devices to be charged consume a lot of power and need to be charged frequently. In addition, users have higher and higher requirements for the charging speed of electronic devices and hope to obtain faster and faster charging speeds to save charging time of electronic devices.

Currently, all quick-charging methods predetermine one or more charging parameters of a battery before the battery is charged. For example, for a step charging method, charging currents of different stages can be predetermined in advance. Then, the same charging parameters are used to charge the battery in subsequent multiple charging processes. However, after the battery is used for a period of time, the battery will age, and continuing to charge the battery with the same charging parameters will affect service life and charging speed of the battery.

SUMMARY

The present disclosure provides a charging method and a charging device, which can satisfy requirements of a battery for service life and charging speed in different charging processes.

In a first aspect, a charging method is provided and includes: determining an actual capacity of a battery; updating one or more charging parameters of the battery according to the actual capacity of the battery, wherein the one or more charging parameters of the battery include at least one of: a charging current of the battery in a constant current stage, a charging cut-off voltage of the battery in the constant current stage, and a charging cut-off current of the battery in a constant voltage stage; charging the battery according to the one or more charging parameters of the battery.

In a second aspect, a charging device is provided and includes a charging management circuit used to execute operations including: determining an actual capacity of a battery; updating one or more charging parameters of the battery according to the actual capacity of the battery, wherein the one or more charging parameters of the battery comprise at least one of: a charging current of the battery in a constant current stage, a charging cut-off voltage of the battery in the constant current stage, and a charging cut-off current of the battery in a constant voltage stage; charging the battery according to the one or more charging parameters of the battery.

In the technical solution provided by the present disclosure, the charging current for charging the battery does not remain unchanged after setting in advance, but the charging current of the battery is constantly updated during the charging process according to the actual capacity of the battery, so that the charging current of the battery can match the actual capacity of the battery, thereby meeting current battery characteristics.

Secondly, during the charging process of the battery, the charging cut-off current of the battery can be continuously updated according to the actual capacity of the battery. The charging cut-off current being updated can ensure that the battery is fully charged to make full use of the battery capacity.

In addition, the charging cut-off voltage in the constant current stage is not fixed, but can be adjusted according to the actual capacity of the battery to prevent the battery from being charged with a low current in shift to an earlier date, thereby ensuring the charging speed of the battery.

BRIEF DESCRIPTION OF DRAWINGS

FIG. 1 is a schematic diagram of a constant current constant voltage charging method provided by an embodiment of the present disclosure.
FIG. 2 is a schematic diagram of a step charging method provided by an embodiment of the present disclosure.
FIG. 3 is a schematic diagram of another step charging method provided by an embodiment of the present disclosure.
FIG. 4 is a schematic structural diagram of a lithium-ion structure provided by an embodiment of the present disclosure.

FIG. 5 is a schematic flowchart of a charging method provided by an embodiment of the present disclosure.

FIG. 6 is a schematic structural diagram of a charging device provided by an embodiment of the present disclosure.

FIG. 7 is a schematic structural diagram of a wired charging system provided by an embodiment of the present disclosure.

FIG. 8 is a schematic structural diagram of another wired charging system provided by an embodiment of the present disclosure.

FIG. 9 is a schematic structural diagram of a wireless charging system provided by an embodiment of the present disclosure.

FIG. 10 is a schematic structural diagram of another wireless charging system provided by an embodiment of the present disclosure.

FIG. 11 is a schematic structural diagram of another wireless charging system provided by an embodiment of the present disclosure.

FIG. 12 is a schematic structural diagram of another wireless charging system provided by an embodiment of the present disclosure.

DETAILED DESCRIPTION OF EMBODIMENTS

With the continuous development of electronic devices, more and more electronic devices need to be charged. In addition, users have higher and higher requirements for the charging speed of electronic devices. They hope to obtain faster and faster charging speeds to save charging time for electronic devices.

A charging method of an embodiment of the present disclosure can be applied to an electronic device to charge an electronic device. The electronic device includes, but is not limited to, configured to be a device for receiving/transmitting communication signals via wired lines (such as public switched telephone network (PSTN), digital subscriber line (DSL), digital cable, direct cable connection, and/or another data connection/network) and/or via wireless interfaces (e.g., a cellular network, a wireless local area network (WLAN), a digital TV network such as a digital video broadcasting handheld (DVB-H) network , a satellite network, amplitude modulation-frequency modulation, AM-FM broadcast transmitter, and/or another communication terminal). A terminal configured to communicate via a wireless interface may be referred to as a "wireless communication terminal," a "wireless terminal," and/or a "mobile terminal." Examples of mobile terminals include, but are not limited to satellite or cellular phones; a personal communication system (PCS) terminal that can combine cellular radio phones with data processing, fax, and data communication capabilities; a personal digital assistant (PDA) that can include radio phones, pagers, the Internet/ with intranet access, web browser, memo pad, calendar, and/or global positioning system (GPS) receiver; and conventional laptop and/or handheld receiver or other electronic devices including a radiotelephone transceiver. In some embodiments, the device to be charged may refer to that the mobile terminal is a device or a handheld terminal device, such as a mobile phone, a pad, and the like. In some embodiments, the device to be charged mentioned in the embodiments of the present disclosure may refer to a chip system. In this embodiment, the battery of the device to be charged may or may not belong to the chip system. Service life.

In addition, electronic devices may further include other electronic devices that require charging, such as mobile phones, mobile power sources (such as power banks, travel chargers, etc.), electric cars, laptops, drones, tablets, e-books, e-cigarettes, smart electronic devices, and small electronic products. Intelligent electronic devices may include, for example, watches, bracelets, smart glasses, and sweeping robots. Small electronic products may include, for example, wireless headsets, Bluetooth speakers, electric toothbrushes, and rechargeable wireless mice.

Currently, commonly used quick-charging methods are all that charging strategy is predetermined before a battery is charged. Then, the battery is charged with the predetermined charging strategy in the subsequent charging process. However, after a period of use, the battery will experience different degrees of aging and decay, which is unavoidable. Suppose the battery continues to charge according to the predetermined charging strategy. In that case, it will cause problems, such as increased battery aging, lower charging speed, and the battery not being fully discharged.

The solution of the embodiment of the present disclosure will be described below in conjunction with a specific charging method.

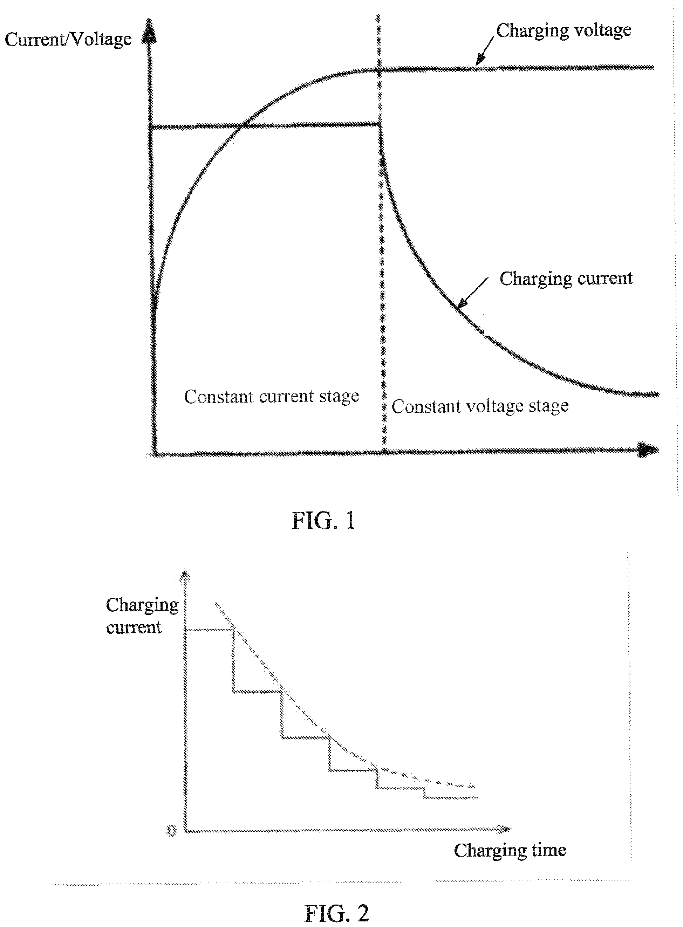

In a first way, a commonly used quick-charging method is a constant current constant voltage (CCCV) charging method, as shown in FIG. 1.

The CCCV charging method may include a constant current constant voltage stage or may include multiple constant current constant voltage stages. Each constant current constant voltage stage includes a constant current stage and a constant voltage stage.

Take a constant current constant voltage stage as an example; as shown in FIG. 1, a constant current constant voltage stage includes a constant current stage and a constant voltage stage. Before charging the battery, a charging current in the constant current stage can be predetermined to 3A in advance, a charging cut-off voltage corresponding to the constant current stage is 4.2V, and a minimum cut-off current corresponding to the constant voltage stage is 0.06A. In the subsequent charging processes, charging is carried out according to the charging strategy that is already set up. In the constant current stage, the battery can be charged with a charging current of 3A until a voltage of the battery reaches a predetermined cut-off voltage, such as 4.2V In the constant voltage stage, the battery can be charged at a constant voltage with a voltage of 4.2V until a charging current of the battery drops to a predetermined minimum cut-off current, such as 0.06A. The minimum cut-off current is determined according to a current as the battery capacity is fully charged.

The charging current of 3A is usually determined according to a rated capacity of the battery. For example, the charging current of the battery is set as a magnification of the rated capacity of the battery, which is 1C, wherein C represents the rated capacity of the battery. It is assumed that the battery capacity is 3000 mAh, the current of 1C is 3A. Similarly, the minimum cut-off current of 0.06A is also determined according to the rated capacity of the battery. For example, the minimum charging cut-off current of the battery is set to 0.02C. It is assumed that the battery capacity is 3000 mAh, the minimum cut-off current of the battery is the charging cut-off current of 0.02C, which is 0.06A.

In a second way, another commonly used quick-charging method is a step charging method, as shown in FIG. 2. The step charging method is to continuously adjust the charging current of the battery according to information on status of the battery, thereby improving the charging speed. In the step charging method, multiple constant current stages are predetermined in advance, and a charging current and charging time corresponding to each constant current stage are set. In subsequent charging processes, the battery is charged in the predetermined charging method.

Specifically, the current I1 is first used to charge the battery for a period t1, and then the current 12 is used to charge the battery for a period t2; similarly, the current In is used to charge the battery for a period tn, wherein n is an integer greater than or equal to 2. The charging current corresponding to different constant current stages can also be determined according to the rated capacity of the battery. It is assumed that the rated current of the battery is 3C, the current I1 can be set to 3C, and the current 12 can be set to 2C. In the charging process, the battery is first charged with a current of 3C for the period t1, and then the battery is charged with a current of 2C for the period t2, etc.

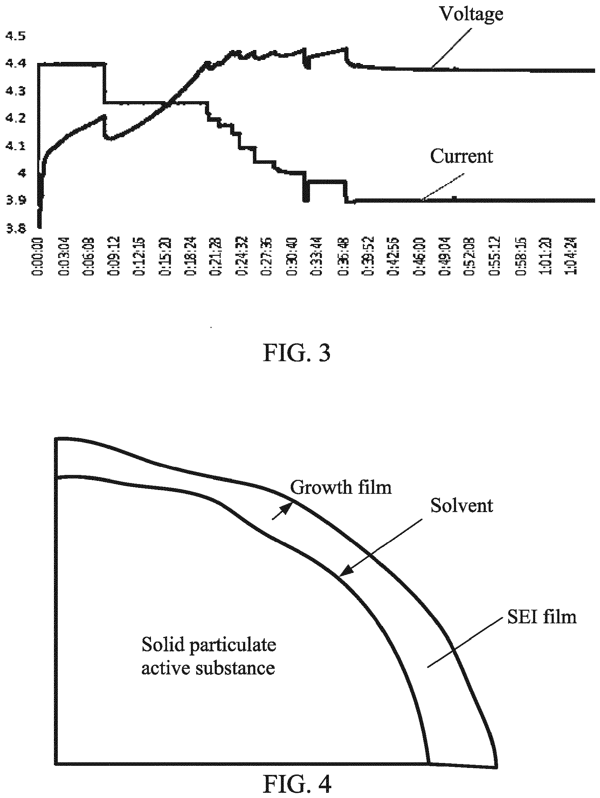

In a third way, there is also a quick-charging method similar to the step charging method. During the charging process, the charging current of the battery is adjusted according to a detected battery voltage, as shown in FIG. 3. For this quick-charging method, different constant current stages can be predetermined in advance, and the charging current and charging cut-off voltage corresponding to each constant current stage can be set. In subsequent charging processes, the battery is charged in a predetermined charging manner.

The charging current corresponding to each constant current stage can also be determined according to the rated capacity of the battery. For example, the battery is charged to a voltage of 4.2V with a charging current of 3C at first, and then the battery is charged to a voltage of 4.4V with a charging current of 2C, and then continuously adjusted until the charging reaches a final charging stage.

In the different charging methods described above, the charging current of the battery is basically set with the rated capacity of the battery as a reference. This is reasonable for the battery that has just been shipped from a factory because the actual capacity of the battery is basically equal to the rated capacity at this time. However, during use of the battery, different degrees of aging and decay will occur, and such decay of the battery is unavoidable. After the battery ages and fades, the actual capacity of the battery will be less than the rated capacity of the battery, and an internal resistance of the battery will also increase to a certain extent. Continuing to use the predetermined charging method will accelerate the aging of the battery and affect service life of the battery.

Taking lithium-ion batteries as an example, the reason for the decay of lithium-ion batteries is essentially a continuous decrease of active lithium ions inside the battery. There are many reasons for the reduction of active lithium ions. The main reason is that lithium ions are consumed, such as formation of solid electrolyte interface (SEI) film on a surface of electrode material and lithium precipitation. Such two cases are described below.

1) Formation of SEI film. The SEI film occurs during normal use of the lithium-ion battery, in particular after the battery is prepared, the surface of the electrode material will react with the electrolyte to form a relatively stable SEI film, as shown in FIG. 4. A main component of the SEI film is a stable compound of lithium (Li), such as LiO. As cycles progress, a series of side reactions will occur inside the battery:

$$\text{Solvent} + \text{Li+} \rightarrow \text{e-} + \text{by-product}$$

The by-product is a mixture including many compounds. The by-product contains Li and has strong stability. This by-product will reduce the active Li inside the battery, causing the capacity of the battery to continue to decrease. In addition, the by-product will increase the internal resistance of the battery, which not only increases the obstacle to the battery charging speed but also generates more heat. This condition will lead to the need to reduce the charging current during the charging process to reduce the temperature rise during the battery charging process.

2) Lithium precipitation. The principle of lithium precipitation is that a layer of Li metal element is generated on the surface of the negative electrode of the battery:

$$\text{Li+} + \text{e-} \rightarrow \text{Li}$$

During the battery charging process, Li+ is continuously doped from the positive electrode to the negative electrode. Once the speed of doping lithium ions on the surface of the negative electrode exceeds the capacity of the negative electrode, there will be lithium ions remaining on the surface of the negative electrode. Because the potential on the surface of the negative electrode continues to decrease, as long as the potential reaches 0V, that is, the potential for generating lithium metal is reached, an elemental lithium metal will be generated.

The formation of elemental lithium metal generally occurs during quick-charging, low temperatures, and aging batteries. The element of lithium metal is generated during the quick-charging process because the speed of doping of lithium ions is lower than the rated magnification. The element of lithium metal is generated at low temperature because ion diffusion activity is reduced due to the low temperature, and the speed of doping inside the material is also reduced; the element of lithium metal is generated in the aging battery because the SEI film formed on the surface of the material by side reactions such as SEI increases the internal resistance of the material surface. In addition, the negative electrode potential can be expressed as:

$$\Phi(negative)= \Phi(e)+\Delta\Phi \ (\Delta\Phi < 0)$$

$\Phi(e)$ represents the voltage of the battery, and $\Delta\Phi$ represents the potential generated by the internal resistance, so the increase of the internal resistance will make the potential on the negative electrode surface more likely to reach 0V, which makes it easier to precipitate lithium.

Lithium precipitation will reduce lithium ions and reduce battery capacity. At the same time, because of directionality of lithium precipitation, precipitated lithium dendrites will pierce a separator, leading to a risk of overheating and even short-circuiting of the positive and negative electrodes.

In summary, during the use of the battery, the actual capacity of the battery will decrease and the internal resistance of the battery will increase. If the charging current of the battery continues to charge the battery with the charging current that is set initially, it will exceed present battery characteristics.

For example, the rated capacity of the battery is 3000 mAh, and the battery is charged with a current of 1C at the beginning; that is, the battery is charged with a current of 3A, but when the capacity of the battery drops to 2500 mAh, the current of 1C should be 2.5A. Namely, the battery should be charged with a current of 2.5A, but the battery cannot be charged with a current of 3A. Continuing to charge the battery with the current of 3A will exceed the present battery characteristics, accelerate the aging of the battery, and affect the service life of the battery.

Secondly, the charging cut-off current in the constant voltage stage is generally determined by fully charging the rated capacity of the battery for wiring. For example, for a battery with a rated capacity of 3000 mAh, the cut-off current for fully charging the battery is 0.02C. If the actual capacity of the battery is equal to the rated capacity of the battery, such as 3000 mAh, then the charging cut-off current is 60 mAh. Still, when the capacity is dropped to 2500 mAh, the charging cut-off current should be 50 mAh instead of 60 mAh. If the battery is only charged to the cut-off current of 60 mAh, the charging cut-off current will be too high, causing a problem of the battery not being fully charging.

In addition, after the battery is used many times, the internal resistance of the battery will increase. Take the third way described above as an example, in the constant current stage, the battery is charged to the cut-off voltage with a constant current. It is assumed that the charging process of the battery includes: charging the battery to 4.2V with a charging current of 1A, and then charging the battery to 4.3V with a charging current of 0.8A. But after the battery is charged many times, the internal resistance of the battery increases from 100 m$\Omega$ to 200 m$\Omega$. After the internal resistance of the battery increases, a fluctuating voltage of the battery increases. When the actual voltage of the battery may be 4V, a detected battery voltage may have reached 4.2V, so that the battery that has not been charged to an expected voltage is charged with a charging current of 0.8A in advance., which will reduce the charging speed of the battery.

In summary, how to set a charging method for the battery to meet the requirements of the charging speed and service life of the battery has become a problem to be solved urgently.

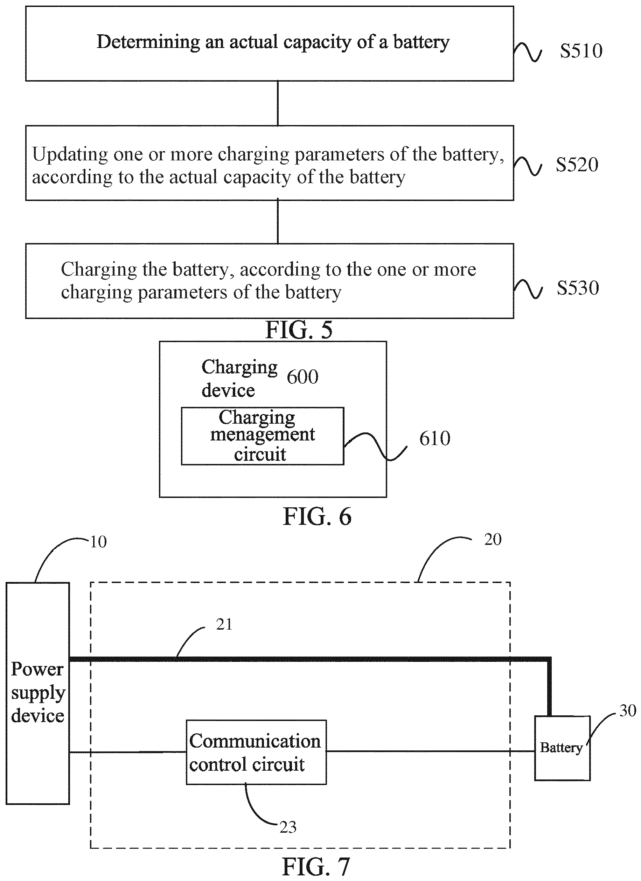

As shown in FIG. 5, an embodiment of the present disclosure provides a charging method that can meet the charging requirement of the battery in different charging processes. The charging method includes steps 510 to 520. The charging method of the embodiment of the present disclosure can be applied to any one of the charging processes described above.

S510: determining an actual capacity of a battery.

S520: updating one or more charging parameters of the battery according to the actual capacity of the battery.

The one or more charging parameters of the battery may include at least one of the following: a charging current of the battery in the constant current stage, a charging cut-off voltage of the battery in the constant current stage, and a cut-off current of the battery in the constant voltage stage.

S530: charging the battery according to the one or more charging parameters of the battery.

In the embodiment of the present disclosure, the charging current for charging the battery does not remain unchanged after setting in advance, but the charging current of the battery is constantly updated during the charging process according to the actual capacity of the battery, so that the charging current of the battery can match the actual capacity of the battery, thereby meeting present battery characteristics.

Secondly, in the embodiment of the present disclosure, during the charging process of the battery, the charging cut-off current of the battery can be continuously updated according to the actual capacity of the battery. The charging cut-off current being updated can ensure that the battery is fully charged to make full use of the battery capacity.

In addition, in the embodiment of the present disclosure, the charging cut-off voltage in the constant current stage is not fixed. Still, it can be adjusted according to the actual capacity of the battery to prevent the battery from being charged with a low current shift to an earlier date, thereby ensuring the charging speed of the battery.

In the embodiment of the present disclosure, a way of determining the charging current of the battery according to the actual capacity of the battery is not specifically limited. For example, the charging current of the battery in the constant current stage can be a first magnification of the actual capacity of the battery. Certainly, the charging current of the battery can also be obtained by performing other calculations on the actual capacity of the battery.

In the embodiment of the present disclosure, the charging current of the battery in the constant current stage can be continuously updated according to the first magnification of the actual capacity of the battery. If the actual capacity of the battery changes, the charging current of the battery in the constant current stage will also correspondingly change, to meet the current charging characteristics of the battery.

The charging current of the battery in the constant current stage that is the first magnification of the actual capacity of the battery can refer to the same constant current stage in the multiple charging process of the battery. The charging current of the battery in the constant current stage can be the first magnification of the actual capacity of the battery. It is assumed that the charging current in the constant current stage is one time the actual capacity of the battery, then, regardless of the actual capacity of the battery, the charging current value of the battery in the constant current stage is the actual capacity value of the battery.

For example, for the first charging method described above, in the constant current stage, the charging current of the battery can be set to 1C, and the battery can be charged with a charging current of 1C. For the battery that is newly shipped out of a factory, the actual capacity of the battery is 3000 mAh, and the battery can be charged with a charging current of 3A in the constant current stage; after the battery is used many times, the actual capacity of the battery will decrease. It is assumed that the actual capacity of the battery changes to 2500 mAh, the battery can be charged with a charging current of 2.5A in the constant current stage. If the actual capacity of the battery continues to decrease after a long time of use, such as dropping to 2000 mAh, then the battery can be charged with a current of 2A in the constant current stage.

For another example, for the second or third way for charging described above, the charging process of the battery may include multiple constant current stages. In this case, it can be set that the charging current of the battery in different constant current stages is equal to a fixed magnification of the actual capacity of the battery. For different constant current stages, the charging current of the battery is a different magnification of the actual capacity of the battery. It is assumed that the battery charging process includes two constant current stages, the charging current in a first constant current stage can be set to be one time the actual capacity of the battery, and the charging current in a second constant current stage is 0.8 times the actual capacity of the battery. Then, in subsequent battery charging processes, regardless of the current actual capacity of the battery, in the first constant current stage, the battery charging current is one time the actual capacity of the battery, and in the second constant current stage, the battery charging current is 0.8 times the actual capacity of the battery.

It is assumed that the actual capacity of the detected battery is 3000 mAh, in the first constant current stage, the battery can be charged with a charging current of 3A, and in the second constant current stage, the battery can be charged with a charging current of 2.4A. If the actual capacity of the battery drops to 2500 mAh after being used for many times, the battery can be charged with a charging current of 2.5A in the first constant current stage, and the battery can be charged with a charging current of 2A in the second constant current stage.

In the embodiment of the present disclosure, the charging current of the battery in the subsequent constant current stage can be determined according to the actual capacity of the battery and the predetermined charging current of the battery in the constant current stage.

In the embodiment of the present disclosure, the form of the charging current in the constant current stage that is initial set does not be specifically limited. For example, a charging magnification of the battery in different constant current stages can be set. For another example, the charging current of the battery in different constant current stages can also be set, and then during the charging process, the charging magnification of the battery can be determined according to the charging current of the battery and the rated capacity of the battery.

If the charging magnification of the battery in the constant current stage is initially set, in the subsequent charging process, the charging current of the battery can be directly determined according to the charging magnification of the battery and the actual capacity of the battery. If the charging current of the battery is initially set, then the charging magnification of the battery can be calculated according to the charging current of the battery and the rated capacity of the battery. Then, in the subsequent charging process, the charging current of the battery is determined according to the calculated charging magnification of the battery and the actual capacity of the battery.

For a step charging method, it is assumed that predetermined charging currents of multiple charging stages are I1, I2, I3, ..., and the rated capacity of the battery is C. Changing magnification of the battery charging current in multiple constant current stages can be respectively determined as 1C, 0.9C, 0.8C, .... by a ratio of the charging current to the rated capacity of the battery. In the subsequent charging process, the actual capacity of the battery, such as one time, 0.9 times, 0.8 times, etc., can be used as the charging currents in multiple constant current stages.

It can be seen from the above that as the actual capacity of the battery continues to decrease, the charging current of the battery in the constant current stage is also continuously reduced, which can ensure that the charging current of the battery in the constant current stage will not exceed the charging characteristics of the battery, which is beneficial to ensure service life of the battery.

Values of the charging magnification described above are only examples, and the charging magnification corresponding to the constant current stage may be other values.

In the embodiment of the present disclosure, a manner of determining the charging cut-off current of the battery according to the actual capacity of the battery does not be specifically limited. For example, the charging cut-off current corresponding to the battery in the constant voltage stage may be a second magnification of the actual capacity of the battery. Certainly, the charging cut-off current of the battery can also be obtained by performing other calculations on the actual capacity of the battery.

In the embodiment of the present disclosure, the charging cut-off current of the battery in the constant voltage stage can be continuously updated according to a fixed magnification of the actual capacity of the battery. If the actual capacity of the battery changes, the charging cut-off current of the battery in the constant voltage stage will correspondingly also change, to meet the current charging characteristics of the battery.

The fixed magnification corresponding to the constant voltage stage may be defined by a battery manufacturer itself, and the fixed magnification may be different for different battery manufacturers. For example, the fixed magnification can be, for example, any value between 0.01 and 0.1.

In the embodiment of the present disclosure, the target cut-off current of the battery in the subsequent constant voltage stage may be determined according to the actual capacity of the battery and a predetermined charging cut-off current of the battery in the constant voltage stage. Then, in the constant voltage stage, the battery is charged until the current of the battery reaches the target cut-off current, to finish the charging process.

In the embodiment of the present disclosure, the form of the charging cut-off current in the constant voltage stage that is initially set does not be specifically limited. For example, a charging cut-off current magnification of the battery in the constant voltage stage can be set in advance, and then in the subsequent charging process, the target cut-off current may be determined according to the charging cut-off current magnification and the actual capacity of the battery. For another example, the predetermined charging cut-off current of the battery in the constant voltage stage can be set, and then the cut-off current ratio is determined according to the predetermined charging cut-off current of the battery and the rated capacity of the battery. Then, in the subsequent charging process, a target cut-off current is determined according to a cut-off current magnification of the battery and the actual capacity of the battery.

For example, if the battery charging cut-off current set when the battery is shipped out of the factory is 0.02C, in the subsequent charging process, 0.02 times the actual capacity of the battery can be directly determined as the target cut-off current of the battery. For another example, if the charging cut-off current of the battery set at the factory is 60 mA, and the rated capacity of the battery when the battery is shipped out of the factory is 3000 mAh, the charge cut-off magnification of the battery can be calculated to be 0.02. In the subsequent charging process, 0.02 times the actual capacity of the battery is determined as the target cut-off current of the battery.

It can be seen from the above that as the actual capacity of the battery continues to decrease, the charging cut-off current of the battery also continues to decrease, which can ensure that the battery can be fully charged after the actual capacity of the battery changes to improve utilization of the battery.

In the embodiment of the present disclosure, the charging cut-off voltage corresponding to the constant current stage may also be determined according to the actual capacity of the battery. For the charging method in which the voltage of the battery is used as a switching condition in the constant current stage, the charging cut-off voltage of the battery in the constant current stage is not fixed and can be adjusted according to the actual capacity of the battery, so that the battery switched between different constant current stages will not be affected by the fluctuating voltage of the battery, and the charging speed of the battery can be guaranteed.

According to the actual capacity of the battery, determining the charging cut-off voltage of the battery in the constant current stage may include: determining the charging cut-off voltage of the battery in the constant current stage according to the actual capacity of the battery and present power of the battery. For example, when the present power of the battery reaches a third magnification of the actual capacity of the battery, the charging voltage of the battery is the charging cut-off voltage of the battery in the constant current stage.

For different constant current stages, different magnifications can be set.

As an example, when the present power of the battery reaches a certain predetermined power, the voltage of the battery can serve as a target cut-off voltage. When the voltage of the battery reaches the target cut-off voltage, the battery can switch to the next charging stage. A ratio between the predetermined power and the actual capacity of the battery is a fixed value, or the predetermined power may also be obtained by performing other calculations on the actual capacity of the battery.

In the embodiment of the present disclosure, the target cut-off voltage of the battery in the subsequent charging process can be updated according to the actual capacity of the battery and predetermined one or more charging parameters in the constant current stage of the battery.

The charging parameter that initially set can be a ratio between the present power of the battery and the actual capacity of the battery, or can also be the charging cut-off voltage corresponding to the constant current stage set when the battery is shipped out of the factory.

For the case that a predetermined charging parameter is a ratio b between the present power of the battery and the actual capacity of the battery, in the subsequent charging process, power Q' of the battery required to be reached in the current constant current stage can be calculated according to the actual capacity of the battery and the ratio b. Then, in the subsequent charging process, the present power of the battery is calculated in real time, and when the present power of the battery reaches the power Q', the battery enters the next charging stage. In this case, the target cut-off voltage may be a corresponding voltage of the battery when the power of the battery reaches the power Q'.

For the case that the predetermined charging parameter is the charging cut-off voltage, it is assumed that the charging current in the constant current stage is I1 and the charging cut-off voltage is 4.2V, the battery can be charged to 4.2V with the charging current I1, the present power Q3 of the battery is calculated, and a ratio of Q3 to the rated capacity of the battery is a%. After the battery is aging, the constant current stage needs to wait for the power charged in the battery to be a% of the actual capacity of the battery, then enter the next constant current stage.

For the third way for charging described above, after the battery is aging, the battery can be charged with the charging current being updated, and then the battery can be charged to the charging cut-off voltage being updated. When the voltage of the battery reaches the charging cut-off voltage being updated, the battery enters the next charging stage.

A calculation method of the present power of the battery may be similar to the calculation method of the actual capacity of the battery, which will be described in detail below.

In the embodiment of the present disclosure, the manner of determining the actual capacity of the battery does not be specifically limited. For example, the actual capacity of the battery can be determined according to the charging current and charging time of the battery.

According to Coulomb's theorem, that is, $Q=It$, the charging capacity of the battery can be determined according to the charging current and charging time of the battery.

When the battery starts to charge from the remaining power Q1 being 0 when the battery finishes to charge as the battery is fully charged, the actual capacity of the battery is equal to the charged power of the battery.

If the battery starts charging from the remaining power Q1 not being 0, then the actual capacity of the battery can be determined according to a sum of the remaining power of the battery and the charged power of the battery.

The charge capacity of the battery can be determined according to the charging current and time at different stages. For example, for the step charging method, the charging currents in different charging stages are I1, I2, ..., and In, and the charge capacity of the battery is $Q2=I1*t1+I2*t2+...+In*tn$. If the battery starts to charge from the remaining power being 0, then the actual capacity of the battery $Q=Q2=I1*t1+I2*t2+......+In*tn$. If the battery starts charging from the remaining power Q1 being not 0, then the actual capacity of the battery $Q=Q1+Q2=Q1+I1*t1+I2*t2+......+In*tn$.

The remaining power of the battery may be determined according to a product of a percentage of the remaining power of the battery and the actual capacity of the battery. If the remaining power of the battery is 20%, then 20% of the actual capacity of the battery can be determined as the remaining power of the battery.

Specifically, for $Q=Q1+Q2$, it is assumed that Q is the actual capacity of the battery during a m-th charging process, Q2 is the power charged in the battery during the m-th charging process, and Q1 is the remaining power of the battery after a (m-1)th charging process in finished. Therefore, Q1 can be obtained according to the percentage of remaining power of the battery and the actual capacity of the battery determined at the (m-1)th time.

If the actual capacity of the battery for the (m-1)th time is uncertain, the then remaining power of the battery can also be determined according to the rated capacity of the battery.

Similarly, the calculation method of the present power of the battery can also refer to the calculation method of the actual capacity of the battery. For example, after the battery is charged with a current I1 for constant current time t1, the present power of the battery is $Q1+I1*t1$. After the battery is charged with a current 12 for constant current time t2, the present power of the battery is $Q1+I1*t1+I2*t2$.

It is assumed that the charging process of the battery includes the adjacent first and second constant current stages, the charging magnification corresponding to the first constant current stage is C1, and the charging magnification corresponding to the second constant current stage is C2.

For the second charging method described above, the charging time corresponding to the first constant current stage is first charging time, and the charging time corresponding to the second constant current stage is second charging time. In the first constant current stage, the battery can be charged with the first current being updated until the charging time of the battery reaches the first charging time; in response to the charging time of the battery reaching the first charging time, the battery enters the second constant current stage, the battery is charged with the second current being updated until the charging time of the battery reaches the second charging time.

For the third charging method described above, in the first constant current stage, the battery is charged with the first current being updated until the voltage of the battery reaches the first charging cut-off voltage being updated; in response to the voltage of the battery reaching the first charging cut-off voltage being updated, the battery enters the second constant current stage, the battery is charged with the second current being updated until the voltage of the battery reaches the second charging cut-off voltage being updated.

The first current being updated may be determined according to the actual capacity of the battery and the charging magnification C1, and the second current being updated may be determined according to the actual capacity of the battery and the charging magnification C2.

Optionally, the current being updated in the constant current stage may be determined according to a product of the actual capacity of the battery and the charging magnification. For the first constant current stage, the product of the actual capacity of the battery and the charge magnification C1 can be used as the first current being updated; for the second constant current stage, a product of the actual capacity of the battery and the charge magnification C2 can be used as the second current being updated.

The charging method of the embodiment of the present disclosure is described in conjunction with the specific charging process by taking the third way for charging as an example.

It is assumed that the battery charging process includes two constant current stages and a constant voltage stage, the initial one or more charging parameters are set as follows: in the first constant current stage, the charging current is 3A and the charging cut-off voltage is 4.2V; in the second constant current stage, the charging current is 2.4A and the charging cut-off voltage is 4.4V; and in the constant voltage stage, the charging voltage is 4.4V and the charging cut-off current is 60 mA.

It is assumed that the rated capacity of the battery is 3000 mAh, according to the initial one or more charging parameters, it can be calculated that the magnification of the charging current of the battery in the first constant current stage is one time, the magnification of the charging current in the second constant current stage is 0.8 times, and the magnification of the charging cut-off current corresponding to the constant voltage stage is 0.02 times.

At the beginning of charging, the battery can be charged according to the initial one or more charging parameters. During the charging process, it can be calculated that when the voltage of the battery reaches 4.2V and 4.4V, the battery power is Q11 and Q22, respectively. In addition, it can be further calculated that the actual capacity Q of the battery when the battery is fully charged. Then, a ratio X of Q11 to Q and a ratio Y of Q22 to Q are calculated.

It is assumed that the calculated actual capacity of the battery is 2500 mAh, in the next charging process, for the first constant current stage, according to the calculated actual battery capacity Q of 2500 mAh and a charge magnification of one time, the charging current of the battery is determined to be 2.5A. Similarly, it can be calculated that the charging current in the second constant current stage is 2500*0.8=2A. It can be calculated that the charging current in the constant voltage stage is 2500*0.02=50mA.

When charging the battery, in the first constant current stage, the battery is charged with a charging current of 2.5A, and the present power of the battery is calculated in real time. When the present power of the battery reaches 2500*X, the battery enters the second constant current stage. In the second constant current stage, the battery is charged with a charging current of 2A, and the present power of the battery is calculated in real time. When the present power of the battery reaches 2500*Y, the battery enters the constant voltage stage. In the constant voltage stage, the battery can be charged in a manner of constant voltage with a charging voltage at the end of the second constant current stage or with a charging voltage higher than the charging voltage at the end of the second constant current stage. In the constant voltage charging process, the charging current of the battery is detected. When the charging current of the battery reaches 50mA, it is finished for charging the battery. Meanwhile, the actual capacity of the battery at the end for charging the battery can also be calculated, and the actual capacity can be used to determine one or more charging parameters for the next charge of the battery.

In the embodiment of the present disclosure, a constant current charging process can be adjusted by a percentage of the actual capacity of the battery. However, during the battery charging process, the charging voltage of the battery still needs to meet a condition, that is, a limit voltage of the battery cannot be exceeded. The limit voltage can be understood as the highest voltage the battery can withstand. It is assumed that the limit voltage of the battery is 4.5V, the charging voltage of the battery cannot exceed 4.5V regardless of any charging stage.

Secondly, other restrictions can also be set during the battery charging process, such as the battery temperature rise and charging time. For situations with many constraints, as long as one condition is met, the charging current needs to be adjusted to avoid affecting the battery.

For example, if the battery is continuously charged with a large current, the temperature of the battery will rise very seriously, which will not only affect the service life of the battery, but also increase the risk of battery charging safety problems. Therefore, during the battery charging process, it is also necessary to detect the battery temperature and other parameters in real time to ensure the safety of battery charging.

It can be understood that all of the magnifications described in the embodiments of the present disclosure refer to a magnification of the battery capacity. The magnification of the battery capacity may include a magnification of the actual capacity of the battery or a magnification of the rated capacity of the battery.

In the embodiment of the present disclosure, the one or more charging parameters of the battery may be updated during each charging process, or the one or more charging parameters of the battery may be updated only during the charging process at n intervals, where n is a positive integer.

The one or more charging parameters of the battery are updated during each charging process, which can ensure that the one or more charging parameters of each battery charge meet the charging characteristics of the battery. Because the actual capacity and internal resistance of the battery will not change greatly during two consecutive charging processes, the one or more charging parameters for the two consecutive charging processes can be the same, and the one or more charging parameters of the battery can be updated once at an interval of n, which can simplify a processing flow of the battery and does not need to calculate the one or more charging parameters of the battery before each charging process.

In the embodiment of the present disclosure, the charging process of the battery may only include a constant current stage, and does not include a constant voltage stage. For example, the charging process of the battery includes at least one constant current stage. Alternatively, the battery charging process may include a constant current stage and a constant voltage stage. For example, the battery charging process may include at least one constant current stage and at least one constant voltage stage.

In the embodiments of the present disclosure, in addition to the actual capacity of the battery, the number of charging cycles of the battery is also considered to determine the one or more charging parameters of the battery. In other words, the one or more charging parameters of the battery can be updated according to the actual capacity of the battery and the number of charging cycles of the battery.

As an example, the number of charging cycles can be segmented, and the one or more charging parameters of the battery in each stage can be kept consistently. For example, the first stage includes the first to the 10th charging cycle processes, and the second stage includes the 11th to the 20th charging cycle processes, and so on. The one or more charging parameters of the battery can be kept consistently during the first to 10th charging cycle processes of the battery, that is, the one or more charging parameters of the second to the 10th charging cycle processes can continue to use the one or more charging parameters of the first time. During the 11th charging cycle process, the one or more charging parameters of the battery can be determined according to the actual capacity of the battery, and the one or more charging parameters of the battery from the 11th to the 20th charging cycle processes can be kept consistently. Because the actual capacity of the battery will not change significantly within an interval of a small number of charging cycles, this method can not only ensure that the one or more charging parameters of the battery match the current characteristics of the battery but also does not need to update the one or more charging parameters of the battery during each charging process, which can save resources.

As another example, the charging magnification of the battery in the constant current stage may be related to the number of times that the battery is charged. Namely, the charging magnification of the battery in the constant current stage may vary with a different number of times that the battery is charged.

For example, the number of charging cycles of the battery can be segmented, the charging magnification in one stage can be kept consistent, and the charging magnification can be different between different stages.

It is assumed that the first stage includes the first to 100th charging cycle processes, the second stage includes the 101st to 200th charging cycle processes, for the first constant current stage, a charging magnification corresponding to the first stage is 1C, a charging magnification corresponding to the second stage is 0.9C, so the charging current of the battery can be determined according to the actual capacity of the battery and the charging magnification 1C of the battery in the first constant current stage during the first to 100th charging cycle processes, and the charging current of the battery can be determined according to the actual capacity of the battery and the charging magnification of 0.9C of the battery in the second constant current stage during the 101st and 200th charging cycle processes.

The battery mentioned in the embodiment of the present disclosure may be a lithium-ion battery or other batteries, such as a sodium-ion battery.

The charging method provided by the embodiments of the present disclosure is described in detail above, and a charging device of embodiments of the present disclosure will be described below with reference to FIGs. 6-12. It should be understood that the features of method embodiments are also applicable to device embodiments. The device embodiments and the method embodiments correspond to each other, so parts that are not described in detail can refer to the previous method embodiments.

It can be understood that a device to be charged and the charging device in the device embodiments may refer to an electronic device described above.

The charging device, shown in FIG. 6, includes a charging management circuit 610. The charging management circuit 610 is used to determine an actual capacity of a battery; to update, according to the actual capacity of the battery, one or more charging parameters of the battery including at least one of: a charging current of the battery in a constant current stage, a charging cut-off voltage of the battery in the constant current stage and a charging cut-off current of the battery in a constant voltage stage; and to charge the battery according to the one or more charging parameters of the battery.

The charging management circuit 610 may, for example, be implemented by a processor. The charging management circuit 610 may, for example, be a chip.

Optionally, the charging current of the battery in the constant current stage is a first magnification of the actual capacity of the battery.

Optionally, the charging cut-off current of the battery in the constant voltage stage is a second magnification of the actual capacity of the battery.

Optionally, the charging cut-off voltage of the battery is determined according to present power of the battery and the actual capacity of the battery.

Optionally, when the present power of the battery reaches a third magnification of the actual capacity of the battery, a present voltage of the battery is the charging cut-off voltage of the battery in the constant current stage.

Optionally, the charging process of the battery includes adjacent first and second constant current stages, the first constant current stage corresponds to a charging magnification C1, and the second constant current stage corresponds to a charging magnification C2, and the charging management circuit 610 is used to: charge the battery with the first current being updated in the first constant current stage until the voltage of the battery reaches the first charging cut-off voltage being updated, the first current being updated is determined according to the actual capacity of the battery and the charging magnification C1; in response to the voltage of the battery reaching the first charging cut-off voltage being updated, the second constant current stage is entered, to charge the battery with the second current being updated until the voltage of the battery reaches the second charging cut-off voltage being updated, the second current being updated is determined according to the actual capacity of the battery and the charge magnification C2.

Optionally, the charging process of the battery includes adjacent first and second constant current stages, the first constant current stage corresponds to a charging magnification C1, and the second constant current stage corresponds to a charging magnification C2, and the charging management circuit 610 is used to: charge the battery with the first current being updated in the first constant current stage until charging time of the battery reaches charging time corresponding to the first constant current stage, the first current being updated is determined according to the actual capacity of the battery and the charging magnification C1, and in response to the charging time of the battery reaching charging time corresponding to the first constant current stage, the second constant current stage is entered, the battery is charged with the second current being updated until the charging time of the battery reaches charging time corresponding to the second constant current stage, and the second current being updated is determined according to the actual capacity of the battery and the charging magnification C2.

Optionally, the battery charging process includes at least one constant current stage, the second constant current stage is a last one constant current stage of the at least one constant current stage, and the battery charging process also includes a constant voltage stage, the charge management circuit 610 is used to: in the constant voltage stage, charge the battery with the charging cut-off voltage in the second constant current stage or a voltage greater than the charging cut-off voltage in the second constant current stage until the charging current of the battery reaches the charging cut-off current being updated in the constant voltage stage.

Optionally, the charging management circuit 610 is used to determine the actual capacity of the battery according to the charging current and charging time of the battery.

Optionally, the charging voltage of the battery is less than a limit voltage of the battery.

Optionally, the charging management circuit 610 is used to update the one or more charging parameters of the battery according to the actual capacity of the battery and a number of charging cycles of the battery.

Optionally, the charging management circuit 610 includes a communication control circuit. The communication control circuit is used to communicate with a power supply device according to the one or more charging parameters of the battery being updated, so that an output voltage and/or an output current of the power supply device matches the one or more charging parameter of the battery being updated.

Optionally, the charging management circuit 610 includes a first charging channel. The first charging channel is used to charge the battery according to the output voltage and/or the output current of the power supply device.

Optionally, the charging device 600 includes a wireless receiving circuit for receiving a wireless charging signal transmitted by a wireless transmitting circuit to charge the battery. The charging management circuit 610 includes a communication control circuit. The communication control circuit is used to communicate with a transmitting device, so that the transmitting device adjusts transmission power of the wireless charging signals transmitted by the wireless transmitting circuit, such that an amplitude of a voltage or current corresponding to the transmission power of the wireless charging signals matches the one or more charging parameters of the battery being updated.

Optionally, the charging management circuit includes a detection circuit, the detection circuit is used to detect at least one of the following parameters of the battery: a charging current, a charging voltage, charging time, and a number of charging cycles.

In the embodiment of the present disclosure, the battery may include one battery cell, or may include M battery cells connected in series (M is a positive integer greater than 1). Taking M=2 as an example, the battery may include a first battery cell and a second battery cell, and the first battery cell and the second battery cell are connected in series with each other.

Compared multiple battery cells with a single battery cell, if they want to achieve a same charging speed, the charging current required by the multiple battery cells is 1/M of the charging current required by the single battery cell. Similarly, if the same charging current is used for charging, the charging speed of the multiple battery cells is M times that of the single battery cell. Therefore, in the case of using the same charging current, the multiple battery cells can greatly increase the charging speed of the battery.

In an embodiment of the present disclosure, the multiple battery cells may be cells with the same or similar specifications and parameters that are convenient for unified management. In addition, selecting cells with the same or similar specifications and parameters can improve the overall performance and service life of the multiple battery cell. Alternatively, the specifications and parameters of the multiple battery cells may be different or inconsistent. During a charging and/or power supply process, an equalization circuit can be used to balance voltages between the multiple battery cells.

Certainly, even if the specifications and parameters of the multiple battery cells are the same, there will be a case that voltages of the battery cells are inconsistent. In this case, an equalization circuit can also be used to balance the voltages of the multiple battery cells.

For a device to be charged that includes multiple battery cells, during the power supply process, a buck circuit can be used to step down the voltages of the multiple battery cells and then supply system power to the device to be charged, or a single battery cell can also be used to supply system power. In addition, during the charging process, if it is necessary to supply power to a system, it can be directly divided into a path to supply power to the system.

In order to maintain power equalization of the multiple battery cells, during charging and discharging processes, the multiple battery cells can be equalized by the equalization circuit. There are many ways to implement the equalization circuit. For example, a load can be connected at both ends of the battery cell to consume the power of the battery to keep it consistent with the power of other battery cells, so that the voltage of each battery cell is consistent. Alternatively, the battery cell with high power can be used to charge the battery cell with low power for equalization until the voltage of each cell is the same. For another example, the equalization circuit may be a Cuk circuit. For example, the equalization circuit may be an equalization circuit based on an RLC series circuit, or a buck-boost-based equalization circuit.

In the technical solution provided by the embodiments of the present disclosure, when the battery includes multiple battery cells, in the constant current stage, it is necessary to monitor whether each battery cell reaches the charging cut-off voltage corresponding to the stage. When the voltage of any battery cell reaches the charging cut-off voltage corresponding to the stage, the constant voltage stage is entered. Alternatively, in some embodiments, charging channels of the cells that have been charged to the cut-off voltage can be disconnected, and the battery cells that are not fully charged are continued to be charged until voltages of all the battery cells reach the charging cut-off voltage, and then the constant voltage stage is entered.

The solution in the embodiment of the present disclosure can be applied in a wired charging process, and can also be applied in a wireless charging process, which is not specifically limited in the embodiment of the present disclosure. For the relevant description in the device embodiments, reference may be made to the description of the method embodiments mentioned above.

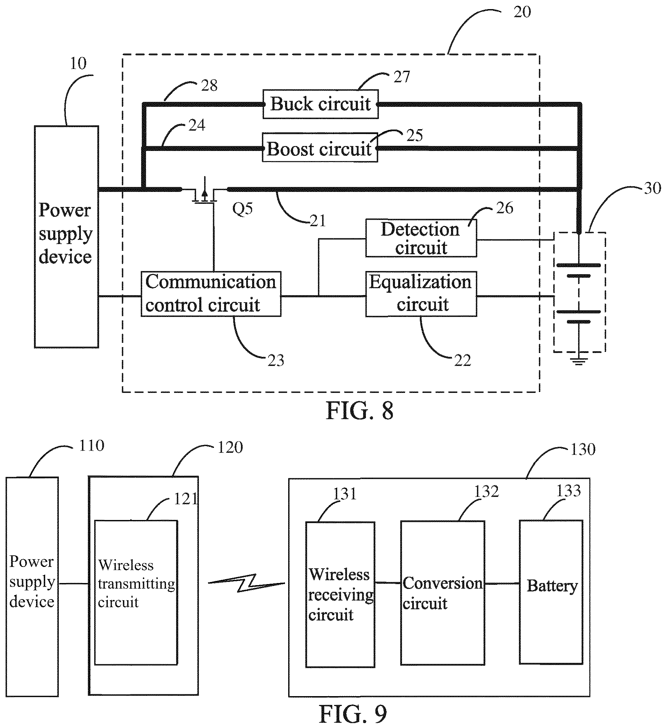

The wired charging process applied in the embodiment of the present disclosure will be described below with reference to FIGs. 7 and 8.

FIG. 7 is a schematic structural diagram of a charging system provided by an embodiment of the present disclosure. The charging system includes a power supply device 10, a charging management circuit 20, and a battery 30. The charging management circuit 20 can be used to manage the battery 30. The charging management circuit 20 can be understood as the charging management circuit described above, and can be used to manage the charging process of the battery.

As an example, the charging management circuit 20 can manage the charging process of the battery 30, such as selecting a charging channel and controlling a charging voltage and/or charging current. As another example, the charging management circuit 20 can manage the battery cells of the battery 30, such as equalizing the voltages of the battery cells in the battery 30.

Specifically, the charging management circuit 20 can be used to determine the actual capacity of the battery 30 and to update one or more charging parameters of the battery according to the actual capacity of the battery 30. The one or more charging parameters of the battery include at least one of: a charging current of the battery in a constant current phase, a charging cut-off current of the battery in the constant current stage, and a charging cut-off current of the battery in a constant voltage stage.

The charging management circuit 20 may be used to communicate with the power supply device 10 according to the one or more charging parameters being updated, so that the output voltage and/or the output current of the power supply device 10 matches the one or more charging parameters being updated. The specific charging process can refer to the above description and will not be repeated here for conciseness.

The charging management circuit 20 may include a first charging channel 21 and a communication control circuit 23.

The first charging channel 21 may be used to receive the charging voltage and/or charging current provided by the power supply device 10 and to load the charging voltage and/or charging current on both ends of the battery 30 for charging the battery 30.

The first charging channel 21 may be, for example, a wire, and some other circuit devices that are not related to the conversion of the charging voltage and/or charging current may also be provided on the first charging channel 21. For example, the charging management circuit 20 includes a first charging channel 21 and a second charging channel, wherein switching devices for switching between charging channels may be provided on the first charging channel 21 (see the description of FIG. 8 for details).

The power supply device 10 may be the above-described power supply device with an adjustable output voltage, wherein the output voltage of the power supply device is consistent with the one or more charging parameters of the battery being updated. However, a type of the power supply device 20 does not be specifically limited in the embodiment of the present disclosure. For example, the power supply device 20 may be a device specially used for charging such as an adapter and a power bank, or may be other devices capable of providing power and data services such as a computer.

The first charging channel 21 may be a direct charging channel, and the charging voltage and/or charging current provided by the power adapter 10 may be directly loaded on both ends of the battery 30. In order to realize a direct charging method, the embodiment of the present disclosure introduces a control circuit with a communication function, i.e., the communication control circuit 23, into the charging management circuit 20. The communication control circuit 23 can maintain communication with the power supply device 10 during a direct charging process to form a closed-loop feedback mechanism, so that the power supply device 10 can obtain status of the battery in real time, thereby continuously adjusting the charging voltage and the charging current injected into the first charging channel, to ensure that the charging voltage and/or charging current provided by the power supply device 10 match the battery 30 in a present charging stage.

For example, the communication control circuit 23 can communicate with the power supply device 10 when the voltage of the battery 30 reaches the charging cut-off voltage corresponding to the constant current stage, so that the charging process of the power supply device 10 to battery 30 is converted from a constant current charging mode to a constant voltage charging mode. For another example, the communication control circuit 23 may communicate with the power supply device 10 when the present power of the battery 30 reaches the charging power corresponding to the constant current stage, so that the charging process of the power supply device 10 to battery 30 is converted from the constant current charging mode to the constant voltage charging mode. For example, the communication control circuit 23 can communicate with the power supply device 10 when the charging current of the battery 30 reaches the charging cut-off current corresponding to the constant voltage stage, so that the charging process of the power supply device 10 to battery 30 is converted from the constant current charging mode to the constant voltage charging mode.

The charge management circuit provided in the embodiment of the present disclosure can directly charge the battery. In other words, the charge management circuit provided in the embodiment of the present disclosure is a charge management circuit supporting a direct charging architecture. In the direct charging architecture, there is no conversion circuit required on the direct charging channel, thereby reducing heat generated from the device to be charged during the charging process.

Optionally, in some embodiments, as shown in FIG. 8, the charging management circuit 20 may further include a second charging channel 24. A boost circuit 25 is provided on the second charging channel 24. During a process of the power supply device 10 charging the battery 30 via the second charging channel 24, the boost circuit 25 can be used to receive an initial voltage provided by the power supply device 10, to boost the initial voltage to a target voltage, and to charge the battery 30 based on the target voltage, wherein the initial voltage is less than a total voltage of the battery 30, and the target voltage is greater than the total voltage of the battery 30; the communication control circuit 23 can also be used to control the switching between the first charging channel 21 and the second charging channel 24.

The communication control circuit 23 can be used to adjust the output voltage and/or the output current of the booster circuit 25 according to the one or more charging parameters of the battery being updated, so that the output voltage and/or output current of the booster circuit 25 matches the one or more charging parameters of the battery being updated.

It is assumed that the battery 30 includes multiple battery cells, the second charging channel 24 can be compatible with a common power supply device to charge the battery 30, which solves a problem that the common power supply device cannot charge the multiple battery cells.

For a battery 30 containing multiple battery cells, the charge management circuit 20 may also include an equalization circuit 22. Referring to the above description, the equalization circuit 22 can be used to equalize the voltage of the multiple battery cells during the charging and/or discharging process of the battery.

The specific form of the boost circuit 25 does not be limited to the embodiment of the present disclosure. For example, a boost circuit can be used, or a charge pump can be used for boosting. Optionally, in some embodiments, the second charging channel 24 may adopt a traditional charging channel design method, that is, a conversion circuit (such as a charging IC) is provided on the second charging channel 24. The conversion circuit can perform constant voltage and constant current control on the battery 30 during the charging process, and adjust the initial voltage provided by the power supply device 10 according to actual requirements, such as step-up or step-down. The embodiment of the present disclosure can use the boost function of the conversion circuit to boost the initial voltage provided by the power supply device 10 to the target voltage.

The communication control circuit 23 can realize the switching between the first charging channel 21 and the second charging channel 24 via a switching device. Specifically, as shown in FIG. 8, a switch Q5 may be provided on the first charging channel 21, when the communication control circuit 23 controls the switch Q5 to be turned on, the first charging channel 21 operates to directly charge the battery 30; when the communication control circuit 23 controls the switch Q5 to be turned off, the second charging channel 24 operates, and the second charging channel 24 is used to charge the battery 30.

In some other embodiments, a circuit or device for step-down can also be provided on the second charging channel 24, when the voltage provided by the power supply device is higher than the voltage required by the battery 30, a voltage dropping process can be performed. In the embodiment of the present disclosure, the circuit or module included in the second charging channel 24 is not limited.

Optionally, in some embodiments, the charging management circuit 20 may further include a third charging channel 28. A buck circuit 27 is provided on the third charging channel 28. During a process of the power supply device 10 charging the battery 30 via the third charging channel 28, the buck circuit 27 can be used to receive the initial voltage provided by the power supply device 10, to drop the initial voltage to the target voltage, and to charge the battery based on the target voltage. The initial voltage is greater than the total voltage of the battery, and the target voltage is also greater than the total voltage of the battery 30.

The communication control circuit 23 can be used to control the switching between the first charging channel 21, the second charging channel 24, and the third charging channel 28.

When the output voltage of the power supply device 10 is greater than the total voltage of the battery 30, the communication control circuit 23 can be used to control the device to be charged to use the third charging channel 28 to charge the battery.

When the output voltage of the power supply device 10 is less than the total voltage of the battery 30, the communication control circuit 23 can be used to control the device to be charged to use the second charging channel 24 to charge the battery.

When the output voltage of the power supply device 10 can match the total voltage of the battery 30, the communication control circuit 23 can be used to control the device to be charged to use the first charging channel 21 to charge the battery 30.

When the charging management circuit 20 includes three charging channels, two or more switches can be used to control the switching between the paths.

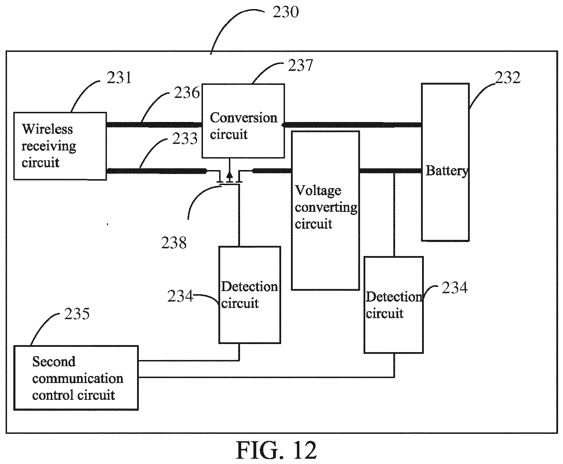

The wireless charging process applied in embodiments of the present disclosure will be described below with reference to FIGs. 9 and 12.

Traditional wireless charging technology generally connects power supply devices (such as adapters) with wireless charging devices (such as wireless charging bases), and transmits output power of the power supply device in a wireless manner (such as electromagnetic waves) to the device to be charged via the wireless charging device for wireless charging the device to be charged.

According to different principles of wireless charging, wireless charging methods are mainly divided into three types: magnetic coupling (or electromagnetic induction), magnetic resonance, and radio waves. Currently, mainstream wireless charging standards include a QI standard, a power matters alliance (PMA) standard, and alliance for wireless power (A4WP). Both the QI standard and the PMA standard use magnetic coupling for wireless charging. The A4WP standard uses magnetic resonance for wireless charging.

A wireless charging method of an embodiment will be introduced below in conjunction with FIG. 9.

As shown in FIG. 9, a wireless charging system includes a power supply device 110, a transmitting device for wireless charging signals 120, and a charging control device 130. The transmitting device 120 may be, for example, a wireless charging base. The charging control device 130 may refer to the device to be charged, for example, it can be a terminal.

After the power supply device 110 is connected to the transmitting device 120, the output voltage and the output current of the power supply device 110 are transmitted to the transmitting device 120.

The transmitting device 120 may convert the output voltage and the output current of the power supply device 110 into a wireless charging signal (for example, an electromagnetic signal) via an internal wireless transmitting circuit 121 for transmission. For example, the wireless transmitting circuit 121 can convert the output current of the power supply device 110 into alternating current, and convert the alternating current into a wireless charging signal via a transmitting coil or a transmitting antenna.

FIG. 9 only exemplarily shows a schematic structural diagram of the wireless charging system, but the embodiment of the present disclosure is not limited to this example. For example, the transmitting device 120 may also be called a transmitting device for wireless charging signals, and the charging control device 130 may also be called a wireless charging signal receiving device. The wireless charging signal receiving device may be, for example, a chip with a wireless charging signal receiving function, which can receive the wireless charging signals transmitted by the transmitting device 120. The wireless charging signal receiving device may also be a device to be charged.

The charging control device 130 may receive the wireless charging signals transmitted by the wireless transmitting circuit 121 via a wireless receiving circuit 131, and convert the wireless charging signals into the output voltage and the output current of the wireless receiving circuit 131. For example, the wireless receiving circuit 131 may convert the wireless charging signals transmitted by the wireless transmitting circuit 121 into alternating current via a receiving coil or a receiving antenna, and perform operations such as rectification and/or filtering on the alternating current to convert the alternating current into the output voltage and the output current of the wireless receiving circuit 131.

In some embodiments, before wireless charging, the transmitting device 120 and the charging control device 130 negotiate transmission power of the wireless transmitting circuit 121 in advance. It is assumed that the power negotiated between the transmitting device 120 and the charging control device 130 is 5W, the output voltage and the output current of the wireless receiving circuit 131 are generally 5V and 1A. It is assumed that the power negotiated between the transmitting device 120 and the charging control device 130 is 10.8W, the output voltage and the output current of the wireless receiving circuit 131 are generally 9V and 1.2A.

If the output voltage of the wireless receiving circuit 131 is not suitable to be directly loaded to both ends of a battery 133, then it is necessary to perform constant voltage and/or constant current control via a conversion circuit 132 in the charging control device 130 to obtain the expected charging voltage and/or charging current of the battery 133 in the charging control device 130.

The conversion circuit 132 may be used to convert the output voltage of the wireless receiving circuit 131 so that the output voltage and/or the output current of the conversion circuit 132 meets the expected charging voltage and/or charging current requirements of the battery 133. Specifically, the conversion circuit 132 may be used to convert the output voltage of the wireless receiving circuit 131 so that the output voltage and/or the output current of the conversion circuit 132 matches the one or more charging parameters of the battery being updated 133.

As an example, the conversion circuit 132 may be, for example, a charging integrated circuit (integrated circuit, IC), or may be a power management circuit. During the charging process of the battery 133, the conversion circuit 132 can be used to manage the charging voltage and/or charging current of the battery 133. The conversion circuit 132 may include a voltage feedback function and/or current feedback function to realize the management of the charging voltage and/or charging current of the battery 133.

As the battery is charged in multiple cycles, the actual capacity of the battery will change, and the one or more charging parameters of the battery will change accordingly. The conversion circuit 132 can be used to adjust the output voltage and/or the output current of the battery according to the one or more charging parameters of the battery being updated, so that the output voltage and/or output current of the conversion circuit 132 matches the one or more charging parameters of the battery being updated.

In a normal charging process, the required charging voltage and/or charging current of the battery may be continuously changing in different charging stages. The output voltage and/or output current of the wireless receiving circuit may need to be continuously adjusted to meet the present charging requirement of the battery. For example, in the constant current charging stage of the battery, during the charging process, the charging current of the battery remains unchanged, but the voltage of the battery is continuously increasing, so the charging voltage required by the battery is also continuously increasing. As the charging voltage required by the battery continues to increase, the charging power required by the battery also continues to increase. When the charging power required by the battery increases, the wireless receiving circuit needs to increase the output power to meet the charging requirement of the battery.

For the same constant current charging stage, in different charging cycles, due to the different actual capacity of the battery, the charging current of the same constant current charging stage is different. If the number of charging cycles is more and more, then the actual capacity of the battery is smaller and smaller, and the charging current corresponding to the constant current stage is smaller and smaller, which can meet the current charging characteristics of the battery.

When the output power of the wireless receiving circuit is less than the charging power currently required by the battery, the communication control circuit may transmit instruction information to the transmitting device to instruct the transmitting device to increase transmission power, so as to increase output power of the wireless receiving circuit. Therefore, during the charging process, the communication control circuit can communicate with the transmitting device, so that the output power of the wireless receiving circuit can meet the charging requirement of the battery in different charging stages and/and different charging cycles.

The embodiment of the present disclosure does not specifically limit a communication mode between a communication control circuit 235 and a transmitting device 220. Optionally, in some embodiments, the communication control circuit 235 and the transmitting device 220 may adopt wireless communication methods for communication, such as Bluetooth communication, wireless fidelity (Wi-Fi) communication or back-scatter modulation (or power load modulation) communication, short-range wireless communication based on high carrier frequency, optical communication, ultrasonic communication, and ultra-wide-band communication or mobile communication.

In an embodiment, the short-range wireless communication module based on a high carrier frequency may include an integrated circuit (IC) chip with an extremely high frequency (EHF) antenna encapsulated therein. Optionally, the high carrier frequency may be 60 GHz.

In an embodiment, the optical communication may use an optical communication module for communication. The optical communication module may include an infrared communication module, wherein the infrared communication module may use infrared rays to transmit information.

In an embodiment, mobile communication may be communication using a mobile communication module. The mobile communication module can use mobile communication protocols such as 5G communication protocol, 4G communication protocol or 3G communication protocol for information transmission.

By using the above-mentioned wireless communication method, compared to a communication method of coupling to the coil of the wireless receiving circuit in the Qi standard by signal modulation, the reliability of communication can be improved, and the voltage ripple caused by a signal coupling method and affecting the voltage processing process of the buck circuit can be avoided.

Optionally, the communication control circuit 235 and the transmitting device 220 may also communicate in a wired communication manner by adopting a data interface.

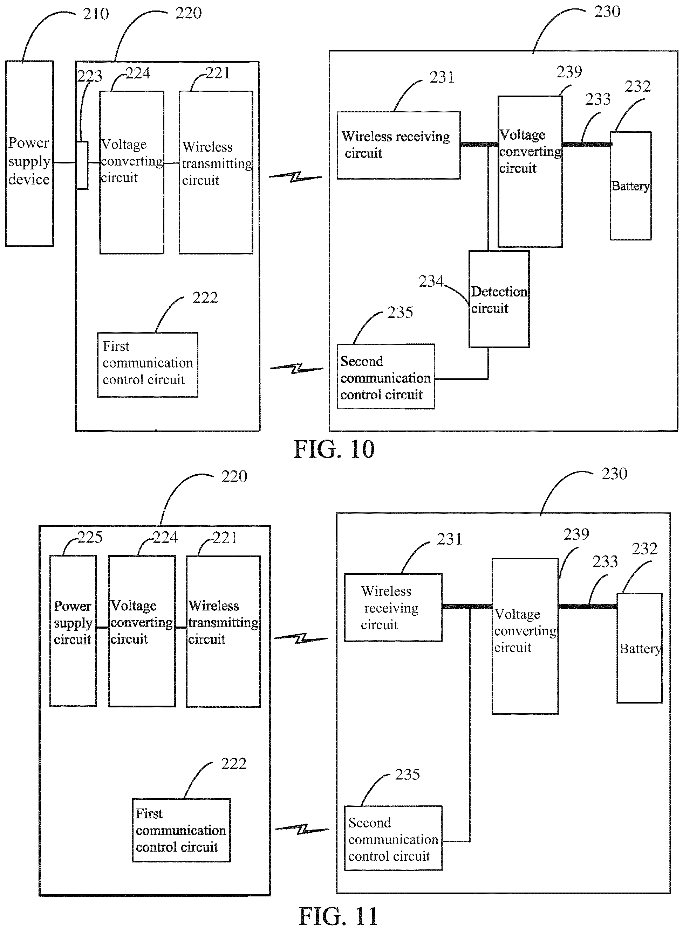

FIG. 10 is another schematic diagram of a charging system provided by an embodiment of the present disclosure. Referring to FIG. 10, the transmitting device for wireless charging signals 220 may further include a charging interface 223, wherein the charging interface 223 may be used to connect to an external power supply device 210. A wireless transmitting circuit 221 can also be used to generate a wireless charging signal according to the output voltage and the output current of the power supply device 210.

A first communication control circuit 222 can also adjust the amount of power that the wireless transmitting circuit 221 extracts from the output power of the power supply device 210 during the wireless charging process to adjust the transmission power of the wireless transmitting circuit 221 so that the power transmitted by the wireless transmitting circuit can meet the charging requirement of the battery. For example, the power supply device 210 can also directly output a relatively large fixed power (such as 40W), and the first communication control circuit 222 can directly adjust the amount of power drawn by the wireless transmitting circuit 221 from the fixed power provided by the power supply device 210.

In the embodiment of the present disclosure, the output power of the power supply device 210 may be fixed. For example, the power supply device 210 can directly output a relatively large fixed power (for example, 40W), and the power supply device 210 can provide output voltage and output current to the wireless charging device 220 according to the fixed output power. During the charging process, the first communication control circuit 222 can extract a certain amount of power from the fixed power of the power supply device for wireless charging according to actual requirements. In other words, the embodiment of the present disclosure allocates the control right of the transmission power adjustment of the wireless transmitting circuit 221 to the first communication control circuit 222. After the first communication control circuit 222 receives the instruction information sent by a second communication control circuit 235, the first communication control circuit 222 can adjust immediately the transmission power to the wireless transmitting circuit 221 to meet the present charging requirement of the battery, which has the advantages of fast adjustment speed and high efficiency.

The embodiment of the present disclosure does not specifically limit the way in which the first communication control circuit 222 extracts the amount of power from the maximum output power provided by the power supply device 210. For example, a voltage converting circuit 224 may be provided inside the transmitting device for wireless charging signals 220, wherein the voltage converting circuit 224 may be connected to the transmitting coil or the transmitting antenna for adjusting the power received by the transmitting coil or the transmitting antenna. The voltage converting circuit 224 may include, for example, a pulse width modulation (PWM) controller and a switch unit. The first communication control circuit 222 can adjust the transmission power of the wireless transmitting circuit 221 by adjusting a duty cycle of a control signal sent by a PWM controller.

The embodiment of the present disclosure does not specifically limit the type of the power supply device 210.

For example, the power supply device 210 may be a device such as an adapter, a power bank (power bank), a car charger, or a computer.

The embodiment of the present disclosure does not specifically limit the type of the charging interface 223. Optionally, in some embodiments, the charging interface 223 may be a USB interface. The USB interface may be, for example, a USB 2.0 interface, a micro USB interface, or a USB TYPE-C interface. Optionally, in other embodiments, the charging interface 223 may also be a lightning interface, or any other type of parallel port and/or serial port that can be used for charging.

The embodiment of the present disclosure does not specifically limit a communication mode between the first communication control circuit 222 and the power supply device 210. As an example, the first communication control circuit 222 may be connected to the power supply device 210 via a communication interface other than the charging interface, and communicate with the power supply device 210 via the communication interface. As another example, the first communication control circuit 222 may communicate with the power supply device 210 in a wireless manner. For example, the first communication control circuit 222 may perform near field communication (NFC) with the power supply device 210. As another example, the first communication control circuit 222 can communicate with the power supply device 210 via the charging interface 223 without providing an additional communication interface or other wireless communication modules, which can simplify the implementation of the wireless charging device 220. For example, the charging interface 223 is a USB interface, and the first communication control circuit 222 can communicate with the power supply device 210 based on a data line (such as a D+ and/or D- line) in the USB interface. For another example, the charging interface 223 may be a USB interface (such as a USB TYPE-C interface) supporting a power delivery (PD) communication protocol, and the first communication control circuit 222 and the power supply device 210 may communicate based on the PD communication protocol.

Optionally, adjusting the transmission power of the wireless charging signals by the first communication control circuit 222 may refer to that the first communication control circuit 222 adjusts the transmission power of the wireless charging signals by adjusting the input voltage and/or input current of the wireless transmitting circuit 221. For example, the first communication control circuit may increase the transmission power of the wireless transmitting circuit by increasing the input voltage of the wireless transmitting circuit.

Optionally, as shown in FIG. 12, a device to be charged 230 also includes a first charging channel 233, via which the output voltage and/or the output current of a wireless receiving circuit 231 can be provided to the battery 232, to charge the battery 232.

Optionally, a voltage converting circuit 239 may be further provided on the first charging channel 233. An input end of the voltage converting circuit 239 is electrically connected to an output end of the wireless receiving circuit 231 and is used to perform a control of constant voltage and/or constant current on the output voltage of the wireless receiving circuit 231 to charge the battery 232 so that the output voltage and/or the output current of the voltage converting circuit 239 matches the charging voltage and/or charging current of the battery currently required.

Optionally, increasing the transmission power of the wireless transmitting circuit 221 may refer to increasing the transmission voltage of the wireless transmitting circuit 221, and increasing the transmission voltage of the wireless transmitting circuit 221 may be achieved by increasing the output voltage of the voltage converting circuit 224. For example, after the first communication control circuit 222 receives the instruction to increase the transmission power sent by the second communication control circuit 235, the transmission power of the wireless transmitting circuit 221 can be increased by increasing the output voltage of the voltage converting circuit 224.

The embodiment of the present disclosure does not specifically limit the manner in which the second communication control circuit 235 sends the instruction information to the first communication control circuit 222.

For example, the second communication control circuit 235 may periodically send instruction information to the first communication control circuit 222. Alternatively, the second communication control circuit 235 may only sent the instruction information to the first communication control circuit 222 after the voltage of the battery reaches the charging cut-off voltage being updated in the constant current stage, or the charging current of the battery reaches the charging cut-off current being updated in the constant voltage stage, or the power of the battery reaches the charging cut-off power being updated in the constant current stage.

Optionally, the wireless charging signals receiving device may further include a detection circuit 234 that can detect the one or more charging parameters of the battery 232. The one or more charging parameters of the battery include at least one of: a charging current, a charging voltage, charging time, and charging power. The second communication control circuit 235 can send instruction information to the first communication control circuit 222 according to the one or more charging parameters of the battery 232 to instruct the first communication control circuit 222 to adjust the output voltage and the output current corresponding to transmission power of the wireless transmitting circuit 221.

As an example, for a second charging method, in the constant current stage, the detection circuit 234 can detect the charging time of the battery 232. When it is detected that the charging time of the battery 232 reaches the charging time corresponding to the constant current stage, the second communication control circuit 235 can communicate with the first communication control circuit 222, so that the first communication control circuit 222 adjusts the wireless charging signals transmitted by the wireless transmitting circuit 221, such that the wireless charging signals transmitted by the wireless transmitting circuit 221 matches the charging requirement in the next charging stage.

As another example, for a third charging method, in the constant current stage, the detection circuit 234 may detect power of the battery 232 and send a detection result to the second communication control circuit 235. When the power of the battery 232 reaches the charge cut-off power corresponding to the constant current stage, the second communication controllable circuit 235 can communicate with the first communication control circuit 222, so that the first communication control circuit 222 can adjust the wireless transmission of the wireless transmitting circuit 221, so that the wireless charging signals transmitted by the wireless transmitting circuit 221 matches the charging requirement in the next charging stage.

In addition, the detection circuit 234 is also used to detect the charging current and charging time of the battery 232 during the charging process, so that the device to be charged 230 can determine the actual capacity of the battery 232 according to the charging current and charging time of the battery 232.

In one embodiment, for the device to be charged, during the constant current charging process, the voltage of the battery will continue to rise, and the charging power required by the battery will also increase accordingly. At this time, the transmit power of the wireless charging signals needs to be increased to meet the present charging requirement of the battery. In the process of constant voltage charging, the charging current of the battery may continue to decrease, and the charging power required by the battery will also decrease accordingly. At this time, the transmit power of the wireless charging signals needs to be reduced to meet the present charging requirement of the battery.

The first communication control circuit 222 can adjust the transmission power of the wireless charging signals according to the instruction information. It can mean that the first communication control circuit 222 adjusts the transmission power of the wireless charging signals so that the transmission power of the wireless charging signals matches the charging voltage and/or charging current of the battery present required.

The matching of the transmission power of the wireless transmitting circuit 221 with the charging voltage and/or charging current of the battery 232 present required may refer to a configuration of the first communication control circuit 222 to the transmission power of the wireless charging signals such that the output voltage and/or the output current of the first charging channel 233 matches the charging voltage and/or charging current of the battery 232 present required (or, the configuration of the first communication control circuit 222 to the transmission power of the wireless charging signals such that the output voltage and/or the output current of the first charging channel 233 meets the charging requirement of the battery 232 (including the requirement of the battery 232 for the charging voltage and/or charging current)).

It should be understood that in an embodiment of the present disclosure, "the matching of the transmission power of the wireless transmitting circuit 221 with the charging voltage and/or charging current of the battery 232 present required" includes: a voltage value and/or current value of direct current power output by the first charging channel 232, and the charging voltage value and/or charging current value required by the battery 232, are equal or within a fluctuating predetermined range (for example, the voltage value fluctuating up and down 100 millivolts to 200 millivolts, the current value fluctuating up and down 0.001A~0.005A, etc.).

The above-mentioned second communication control circuit 235 determines the one or more charging parameters of the battery being updated according to the one or more charging parameters of the battery 232 detected by the detection circuit 234, and wirelessly communicates with the first communication control circuit 222, so that the first communication control circuit 222 adjusts the transmission power of the wireless transmitting circuit 221 according to the one or more charging parameters of the battery being updated 232. Adjusting the transmission power of the wireless transmitting circuit 221 may include: during the constant current charging stage of the battery 232, the second communication control circuit 235 performs wireless communication with the first communication control circuit 222 according to the detected voltage of the battery, so that the output voltage of the first charging channel 233 matches the charging voltage of the battery being updated in the constant current charging stage (or, the output voltage of the first charging channel 233 meets the charging voltage requirement of the battery 232 in the constant current charging stage).

FIG. 11 is another example of a charging system provided by an embodiment of the present disclosure. A transmitting device for wireless charging signals 220 corresponding to the embodiment shown in FIG. 11 does not obtain electric energy from a power supply device 210, but directly converts externally input alternating current power (such as commercial power) into the above-mentioned wireless charging signal.

As shown in FIG. 11, a transmitting device for wireless charging signals 220 may further include a voltage converting circuit 224 and a power supply circuit 225. The power supply circuit 225 may be used to receive external alternating current power (such as commercial power), and generate an output voltage and an output current of the power supply circuit 225 according to the alternating current power. For example, the power supply circuit 225 may rectify and/or filter the alternating current to obtain direct current or pulsating direct current, and transmit the direct current or pulsating direct current to the voltage converting circuit 224.

The voltage converting circuit 224 can be used to receive the output voltage of the power supply circuit 225 and convert the output voltage of the power supply circuit 225 to obtain the output voltage and the output current of the voltage converting circuit 224. The wireless transmitting circuit 221 can also be used to generate a wireless charging signal according to the output voltage and the output current of the voltage converting circuit 224.

The embodiment of the present disclosure integrates a function similar to an adapter inside the transmitting device for wireless charging signals 220, so that the transmitting device for wireless charging signals 220 does not need to obtain power from an external power supply device, which improves the integration of the transmitting device for wireless charging signals 220 and reduces the number of devices required to realize a wireless charging process.

Optionally, in some embodiments, the transmitting device for wireless charging signals 220 may support a first wireless charging mode and a second wireless charging mode. The charging speed of the transmitting device for wireless charging signals 220 operating in the first wireless charging mode is faster than the charging speed of the transmitting device for wireless charging signals 220 operating in the second wireless charging mode. In other words, compared to the transmitting device for wireless charging signals 220 operating in the second wireless charging mode, the transmitting device for wireless charging signals 220 operating in the first wireless charging mode takes less time to fill the battery in the devices to be charged with the same capacity.

The charging method provided in the embodiment of the present disclosure may use the first charging mode for charging, and may also use the second charging mode for charging, which is not limited to the embodiment of the present disclosure.

The second wireless charging mode may be a so-called normal wireless charging mode, for example, may be a traditional wireless charging mode based on the QI standard, the PMA standard, or the A4WP standard. The first wireless charging mode may be a wireless quick charging mode. The normal wireless charging mode can refer to a wireless charging mode in which the transmission power of the transmitting device for wireless charging signals 220 is relatively small (generally less than 15W, wherein commonly used transmission power is 5W or 10W). In the normal wireless charging mode, if a large-capacity battery (such as a 3000 mAh battery) wants to be fully charged, it generally takes several hours. In the wireless quick charging mode, transmission power of the transmitting device for wireless charging signals 220 is relatively large (generally greater than or equal to 15W). Compared with the normal wireless charging mode, the transmitting device for wireless charging signals 220 operating in the wireless quick charging mode to fully charge a battery of the same capacity can significantly shorten required charging time and speed up charging speed.

Referring to FIG. 12, in an embodiment of the present disclosure, a device to be charged 230 further includes: a second charging channel 236. The second charging channel 236 may be a wire. A conversion circuit 237 may be provided on the second charging channel 236 to perform voltage control on direct current power output by a wireless receiving circuit 231 to obtain the output voltage and the output current of the second charging channel 236 to charge the battery 232.

In one embodiment, the conversion circuit 237 can be used for a buck circuit, and output constant current and/or constant voltage electric energy. In other words, the conversion circuit 237 can be used to perform constant voltage and/or constant current control on a battery charging process.

When the second charging channel 236 is used to charge the battery 232, the wireless transmitting circuit 221 can use constant transmission power to transmit an electromagnetic signal. After the wireless receiving circuit 231 receives the electromagnetic signal, which is processed by the conversion circuit 237 to generate a voltage and current satisfying a charging requirement of the battery 232 to input the battery 232 for charging the battery 232. It should be understood that, in some embodiments, the constant transmission power does not necessarily mean that the transmission power remains completely unchanged, and can vary within a certain range, for example, the transmit power fluctuates 0.5W up and down from 7.5W.

In the embodiment of the present disclosure, the charging method for charging the battery 232 via the first charging channel 233 is the first wireless charging mode, and the charging method for charging the battery 232 via the second charging channel 236 is called the second wireless charging mode. The transmitting device for wireless charging signals and the device to be charged can determine to use the first wireless charging mode or the second wireless charging mode to charge the battery 232 by handshake communication.

In the embodiment of the present disclosure, for the transmitting device for wireless charging signals, when the device to be charged is charged in the first wireless charging mode, the maximum transmission power of the wireless transmitting circuit 221 may be a first transmission power value. When the device to be charged is charged in the second wireless charging mode, the maximum transmission power of the wireless transmitting circuit 221 may be a second transmission power value. The first transmission power value is greater than the second transmission power value. Thus, the speed of charging the device to be charged in the first wireless charging mode is greater than that in the second wireless charging mode.

Optionally, the second communication control circuit 235 can also be used to control the switching between the first charging channel 233 and the second charging channel 236. For example, as shown in FIG. 12, a switch 238 can be provided on the first charging channel 233, and the second communication control circuit 235 can control the switching between the first charging channel 233 and the second charging channel 236 by controlling the switch 238 to be turned on and off. As pointed out above, in some embodiments, the transmitting device for wireless charging signals 220 may include the first wireless charging mode and the second wireless charging mode, and the speed of charging the transmitting device for wireless charging signals 220 in the first wireless charging mode is faster than the speed of charging the transmitting device for wireless charging signals 220 in the second wireless charging mode. When the transmitting device for wireless charging signals 220 uses the first wireless charging mode to charge the battery in the device to be charged 230, the device to be charged 230 can control the operation of the first charging channel 233; and when the transmitting device for wireless charging signals 220 uses the second wireless to charge the battery in the device to be charged 230, the device to be charged 230 can control the operation of the second charging channel 236.

On one side having the device to be charged, the second communication control circuit 235 can switch between the first charging channel 233 and the second charging channel 236 according to the charging mode. When the first wireless charging mode is adopted, the second communication control circuit 235 controls the operation of the voltage converting circuit 239 on the first charging channel 233. When the second wireless charging mode is adopted, the second communication control circuit 235 controls the operation of the conversion circuit 237 on the second charging channel 236.

Optionally, the transmitting device for wireless charging signals 220 may communicate with the device to be charged 230 to negotiate a charging mode between the transmitting device for wireless charging signals 220 and the device to be charged 230.

In addition to the communication content described above, the first communication control circuit 222 in the transmitting device for wireless charging signals 220 and the second communication control circuit 235 in the device to be charged 230 can also exchange other communication information. In some embodiments, the first communication control circuit 222 and the second communication control circuit 235 can exchange information for safety protection, anomaly detection, or fault handlings, such as temperature information of the battery 232, information for indicating to enter the overvoltage protection or overcurrent Information, and power transmission efficiency information (wherein the power transmission efficiency information can be used to indicate the power transmission efficiency between the wireless transmitting circuit 221 and the wireless receiving circuit 231).

Optionally, the communication between the second communication control circuit 235 and the first communication control circuit 222 may be one-way communication or two-way communication, which is not specifically limited in the embodiment of the present disclosure.

In the embodiment of the present disclosure, the function of the second communication control circuit can be implemented by an application processor of the device to be charged 230, thus, the hardware cost can be saved. Alternatively, it can also be implemented by an independent control chip, and implementation by an independent control chip can improve the reliability of control.

Optionally, in the embodiment of the present disclosure, the wireless receiving circuit 232 and the voltage converting circuit 239 may be integrated into single wireless charging chip, which can improve the integration of the device to be charged and simplify the implementation of the device to be charged. For example, functions of traditional wireless charging chips can be expanded to support charging management functions.

In the above-mentioned embodiment, it may be implemented in whole or in part by software, hardware, firmware, or any other combination. When implemented by software, it can be implemented in the form of a computer program product in whole or in part. The computer program product includes one or more computer instructions. When the computer program instructions are loaded and executed on the computer, the processes or functions described in the embodiments of the present disclosure are generated in whole or in part. The computer may be a general-purpose computer, a special-purpose computer, a computer network, or other programmable device. The computer instructions may be stored in a computer-readable storage medium, or transmitted from one computer-readable storage medium to another computer-readable storage medium. For example, the computer instructions may be transmitted from a website, computer, server, or data center to another website, computer, server, or data center via wired (such as coaxial cable, optical fiber, and digital subscriber line (DSL)) or wireless (such as infrared, wireless, and microwave). The computer-readable storage medium may be any available medium that can be accessed by a data storage device, such as a server and a data center, integrated with one or more available media. The usable medium may be a magnetic medium (for example, a floppy disk, a hard disk, a magnetic tape), an optical medium (for example, a digital video disc (DVD)), or a semiconductor medium (for example, a solid state disk (SSD)).

A person having ordinary skill in the art may be conscious that units and algorithm steps of examples described in combination with the embodiments disclosed herein can be implemented by electronic hardware or a combination of computer software and electronic hardware. Whether these functions are executed by hardware or software depends on the specific application and design constraint conditions of the technical solution. Professionals and technicians can use different methods for each specific application to implement the described functions, but such implementation should not be considered beyond the scope of the present disclosure.

In the several embodiments provided in the present disclosure, it should be understood that the disclosed system, device, and method may be implemented in other ways. For example, the device embodiments described above are only illustrative. For example, the division of the units is only a logical function division, and there may be other divisions in actual implementation, for example, multiple units or components can be combined or integrated into another system, or some features can be ignored or not implemented. In addition, the displayed or discussed mutual coupling or direct coupling or communicating connection may be indirect coupling or communicating connection via some interfaces, devices, or units, and may be in electrical, mechanical, or other forms.

The units described as separate components may or may not be physically separated, and the components displayed as units may or may not be physical units, that is, they may be located in one place, or they may be distributed on multiple network units. Some or all of the units may be selected according to actual requirements to achieve objectives of solutions of the embodiments.

In addition, functional units in the various embodiments of the present disclosure may be integrated into one processing unit, or each unit may exist alone physically, or two or more units may be integrated into one unit.

The above are only specific implementations of the present disclosure, but the protection scope of the present disclosure is not limited to this. Any changes or substitutions that can be easily thought of by a person skilled in the art within the technical scope should be covered within the scope of protection of the present disclosure. Therefore, the protection scope of the present disclosure should be subject to the protection scope of the claims.

**Claims**

1.  A charging method, **characterized in that** the method comprises:

    determining an actual capacity of a battery;
    updating one or more charging parameters of the battery according to the actual capacity of the battery, wherein the one or more charging parameters of the battery comprise at least one of: a charging current of the battery in a constant current stage, a charging cut-off voltage of the battery in the constant current stage, and a charging cut-off current of the battery in a constant voltage stage;
    charging the battery according to the one or more charging parameters of the battery.

2.  The charging method as claimed in claim 1, **characterized in that** the charging current of the battery in the constant current stage is a first magnification of the actual capacity of the battery.

3.  The charging method as claimed in claim 1 or 2, **characterized in that** the charging cut-off current of the battery in the constant voltage stage is a second magnification of the actual capacity of the battery.

4.  The charging method as claimed in any one of claims 1 to 3, **characterized in that** the charging cut-off voltage of the battery is determined according to present power of the battery and the actual capacity of the battery.

5.  The charging method as claimed in claim 4, **characterized in that** when the present power of the battery reaches a third magnification of the actual capacity of the battery, a present voltage of the battery is the charging cut-off voltage of the battery in the constant current stage.

6.  The charging method as claimed in any one of claims 1 to 5, **characterized in that** a charging process of the battery comprises at least one constant current stage, wherein the at least one constant current stage comprises a first constant current stage and a second constant current stage adjacent to each other, a charging magnification corresponding to the first constant current stage is C1, and a charging magnification corresponding to the second constant current stage is C2,
    wherein the charging the battery according to the one or more charging parameters of the battery comprises:

    in the first constant current stage, charging the battery with the first current being updated until a voltage of the battery reaches the first charging cut-off voltage being updated, wherein the first current being updated is determined according to the actual capacity of the battery and the charging magnification C1;
    in response to the voltage of the battery reaching the first charging cut-off voltage being updated, entering the second constant current stage, and charging the battery with the second current being updated until the voltage of the battery reaches the second charging cut-off voltage being updated, wherein the second current being updated is determined according to the actual capacity of the battery and the charge magnification C2.

7.  The charging method as claimed in any one of claims 1 to 5, **characterized in that** the charging process of the battery comprises at least one constant current stage, wherein the at least one constant current stage comprises a first constant current stage and a second constant current stage adjacent to each other, a charging magnification corresponding to the first constant current stage is C1, and a charging magnification corresponding to the second constant current stage is C2,

wherein the charging the battery according to the one or more charging parameters of the battery comprises:

in the first constant current stage, charging the battery with the first current being updated until charging time of the battery reaches charging time corresponding to the first constant current stage, wherein the first current being updated is determined according to the actual capacity of the battery and the charging magnification C1, in response to the charging time of the battery reaching the charging time corresponding to the first constant current stage, entering the second constant current stage, and charging the battery with the second current being updated until the charging time of the battery reaches the charging time corresponding to the second constant current stage, wherein the second current being updated is determined according to the actual capacity of the battery and the charging magnification C2.

8. The charging method as claimed in claim 6 or 7, **characterized in that** the charging process of the battery further comprises a constant voltage stage, in a case that the second constant current stage is a last constant current stage of the at least one constant current stage, the charging the battery according to the one or more charging parameters of the battery comprises:

in the constant voltage stage, charging the battery with the charging cut-off voltage in the second constant current stage or with a voltage greater than the charging cut-off voltage in the second constant current stage until the charging current of the battery reaches the charge cut-off current being updated in the constant voltage stage.

9. The charging method as claimed in any one of claims 1 to 8, **characterized in that** the determining the actual capacity of the battery comprises:

determining the actual capacity of the battery according to a charging current and charging time of the battery.

10. The charging method as claimed in any one of claims 1 to 9, **characterized in that** a charging voltage of the battery is less than or equal to a limit voltage of the battery.

11. The charging method as claimed in any one of claims 1 to 10, **characterized in that** updating the one or more charging parameters of the battery according to the actual capacity of the battery comprises:

updating the one or more charging parameters of the battery according to the actual capacity of the battery and a number of charging cycles of the battery.

12. A charging device, **characterized in that** the charging device comprises a charging management circuit, wherein the charging management circuit is configured to execute operations comprising:

determining an actual capacity of a battery;
updating one or more charging parameters of the battery according to the actual capacity of the battery, wherein the one or more charging parameters of the battery comprise at least one of: a charging current of the battery in a constant current stage, a charging cut-off voltage of the battery in the constant current stage, and a charging cut-off current of the battery in a constant voltage stage;
charging the battery according to the one or more charging parameters of the battery.

13. The charging device as claimed in claim 12, **characterized in that** the charging current of the battery in the constant current stage is a first magnification of the actual capacity of the battery.

14. The charging device as claimed in claim 12 or 13, **characterized in that** the charging cut-off current of the battery in the constant voltage stage is a second magnification of the actual capacity of the battery.

15. The charging device as claimed in any one of claims 12 to 14, **characterized in that** the charging cut-off voltage of the battery is determined according to present power of the battery and the actual capacity of the battery.

16. The charging device as claimed in claim 15, **characterized in that** when the present power of the battery reaches a third magnification of the actual capacity of the battery, a present voltage of the battery is the charging cut-off voltage of the battery in the constant current stage.

17. The charging device as claimed in any one of claims 12 to 16, **characterized in that** a charging process of the battery comprises at least one constant current stage, wherein the at least one constant current stage comprises a first constant current stage and a second constant current stage adjacent to each other, a charging magnification corresponding to the first constant current stage is C1, and a charging magnification corresponding to the second constant current stage is C2, wherein the charging management circuit is configured for:

in the first constant current stage, charging the battery with the first current being updated until a voltage of the battery reaches the first charging cut-off voltage being updated, wherein the first current being updated is determined according to the actual capacity of the battery and the charging magnification C1;
in response to the voltage of the battery reaching the first charging cut-off voltage being updated, entering the second constant current stage, and charging the battery with the second current being updated until the voltage of the battery reaches the second charging cut-off voltage being updated, wherein the second current being updated is determined according to the actual capacity of the battery and the charge magnification C2.

18. The charging device as claimed in any one of claims 12 to 16, **characterized in that** the charging process of the battery comprises at least one constant current stage, wherein the at least one constant current stage comprises a first constant current stage and a second constant current stage adjacent to each other, a charging magnification corresponding to the first constant current stage is C1, and a charging magnification corresponding to the second constant current stage is C2, wherein the charging management circuit is configured for:

in the first constant current stage, charging the battery with the first current being updated until charging time of the battery reaches charging time corresponding to the first constant current stage, wherein the first current being updated is determined according to the actual capacity of the battery and the charging magnification C1, in response to the charging time of the battery reaching the charging time corresponding to the first constant current stage, entering the second constant current stage, and charging the battery with the second current being updated until the charging time of the battery reaches the charging time corresponding to the second constant current stage, wherein the second current being updated is determined according to the actual capacity of the battery and the charging magnification C2.

19. The charging device as claimed in claim 17 or 18, **characterized in that** the charging process of the battery comprises at least one constant current stage, the second constant current stage is a last constant current stage of the at least one constant current stage, and the charging process of the battery further comprises a constant voltage stage, wherein the charging management circuit is configured for:
in the constant voltage stage, charging the battery with the charging cut-off voltage in the second constant current stage or with a voltage greater than the charging cut-off voltage in the second constant current stage until the charging current of the battery reaches the charge cut-off current being updated in the constant voltage stage.

20. The charging device as claimed in any one of claims 12 to 19, **characterized in that** the charging management circuit is configured for:
determining the actual capacity of the battery according to a charging current and charging time of the battery.

21. The charging device as claimed in any one of claims 12 to 20, **characterized in that** a charging voltage of the battery is less than or equal to a limit voltage of the battery.

22. The charging device as claimed in any one of claims 12 to 21, **characterized in that** the charging management circuit is configured for:
updating the one or more charging parameters of the battery according to the actual capacity of the battery and a number of charging cycles of the battery.

23. The charging device as claimed in any one of claims 12 to 22, **characterized in that** the charging management circuit comprises a communication control circuit, wherein the communication control circuit is configured to communicate with a power supply device according to the one or more charging parameters of the battery being updated, so that an output voltage and/or an output current of the power supply device matches the one or more charging parameter of the battery being updated.

24. The charging device as claimed in claim 23, **characterized in that** the charging management circuit comprises a first charging channel, wherein the first charging channel is configured to charge the battery according to an output voltage and/or an output current provided by the power supply device.

25. The charging device as claimed in any one of claims 12 to 22, **characterized in that** the charging device comprises a wireless receiving circuit, wherein the wireless receiving circuit is configured to receive a wireless charging signal transmitted by a wireless transmitting circuit to charge the battery,

wherein the charging management circuit comprises a communication control circuit configured to communicate with a transmitting device so that the transmitting device adjusts transmission power of the wireless charging signals transmitted by the wireless transmitting circuit, so that a voltage and/or a current corresponding to the transmission power of the wireless charging signals matches the one or more charging parameters of the battery being updated.

26. The charging device as claimed in any one of claims 12 to 25, **characterized in that** the charging management circuit comprises a detection circuit, wherein the detection circuit is configured to detect at least one of parameters of the battery: a charging current, a charging voltage, charging time, and a number of charging cycles.

FIG. 1

FIG. 2

FIG. 3

FIG. 4

| Determining an actual capacity of a battery | S510 |

| Updating one or more charging parameters of the battery, according to the actual capacity of the battery | S520 |

| Charging the battery, according to the one or more charging parameters of the battery | S530 |

**FIG. 5**

Charging device 600

| Charging menagement circuit | 610 |

**FIG. 6**

10

20

21

Power supply device

Communication control circuit

23

Battery 30

**FIG. 7**

FIG. 8

FIG. 9

FIG. 10

FIG. 11

230

231

236

237 Conversion
circuit

233

Wireless
receiving
circuit

232

Battery

238

Voltage
converting
circuit

234 Detection
circuit

235

234 Detection
circuit

Second
communication
control circuit

FIG. 12

## INTERNATIONAL SEARCH REPORT

| International application No. |
| --- |
| **PCT/CN2019/085724** |

**A.      CLASSIFICATION OF SUBJECT MATTER**

H02J 7/00(2006.01)i

According to International Patent Classification (IPC) or to both national classification and IPC

**B.      FIELDS SEARCHED**

Minimum documentation searched (classification system followed by classification symbols)

H02J

Documentation searched other than minimum documentation to the extent that such documents are included in the fields searched

Electronic data base consulted during the international search (name of data base and, where practicable, search terms used)

CNABS, CNKI, DWPI, SIPOABS: 电池, 充电, 实际容量, 调整, 适应, 优化, 充电参数, 恒流, 恒压, 充电电流, 截止电压, 截止电流, 寿命, 速度, battery, charge, capacity, adjust, optimize, parameter, constant current, constant voltage, lifetime, speed

**C.      DOCUMENTS CONSIDERED TO BE RELEVANT**

| Category* | Citation of document, with indication, where appropriate, of the relevant passages | Relevant to claim No. |
| --- | --- | --- |
| X | CN 106505695 A (GUANGDONG OPPO MOBILE TELECOMMUNICATIONS CORP., LTD.) 15 March 2017 (2017-03-15)<br>    description, paragraphs 0051-0074, and figure 2 | 1-26 |
| A | CN 101404347 A (CHINA MOBILE GROUP GANSU CO., LTD.) 08 April 2009 (2009-04-08)<br>    entire document | 1-26 |
| A | CN 107437642 A (POWERVISION TECH INC.) 05 December 2017 (2017-12-05)<br>    entire document | 1-26 |
| A | CN 105305514 A (ZTE CORPORATION) 03 February 2016 (2016-02-03)<br>    entire document | 1-26 |
| A | CN 103579706 A (COMPAL ELECTRONICS, INC.) 12 February 2014 (2014-02-12)<br>    entire document | 1-26 |
| A | WO 2017111238 A1 (SAMSUNG ELECTRONICS CO., LTD.) 29 June 2017 (2017-06-29)<br>    entire document | 1-26 |

☐ Further documents are listed in the continuation of Box C.      ☑ See patent family annex.

| | |
| --- | --- |
| *      Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **03 February 2020** | **14 February 2020** |

| Name and mailing address of the ISA/CN | Authorized officer |
| --- | --- |
| **China National Intellectual Property Administration (ISA/ CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2019/085724**

| Patent document cited in search report | | | Publication date (day/month/year) | Patent family member(s) | | | Publication date (day/month/year) |
|---|---|---|---|---|---|---|---|
| CN | 106505695 | A | 15 March 2017 | CN | 106505695 | B | 16 April 2019 |
| CN | 101404347 | A | 08 April 2009 | None | | | |
| CN | 107437642 | A | 05 December 2017 | None | | | |
| CN | 105305514 | A | 03 February 2016 | WO | 2015196641 | A1 | 30 December 2015 |
| CN | 103579706 | A | 12 February 2014 | US | 2014042961 | A1 | 13 February 2014 |
| | | | | TW | 201407923 | A | 16 February 2014 |
| | | | | TW | 201407179 | A | 16 February 2014 |
| | | | | CN | 103683375 | A | 26 March 2014 |
| | | | | TW | 201407860 | A | 16 February 2014 |
| WO | 2017111238 | A1 | 29 June 2017 | KR | 20170075187 | A | 03 July 2017 |

Form PCT/ISA/210 (patent family annex) (January 2015)